# EUROPEAN PATENT APPLICATION

(11) **EP 4 543 091 A1**
(43) Date of publication of application: **23.04.2025**
(21) Application number: 23838870.6
(22) Date of filing: 07.07.2023
(51) Int. Cl.: H04W 40/24

(54) **COMMUNICATION METHOD AND APPARATUS**

(30) Priority: 13.07.2022 CN 202210825273
(71) Applicant: Huawei Technologies Co., Ltd., Shenzhen, Guangdong 518129 (CN)
(72) Inventor: HAN, Zhilin, Shenzhen, Guangdong 518129 (CN); ZHU, Haoren, Shenzhen, Guangdong 518129 (CN)
(74) Representative: Körber, Martin Hans
(86) International application number: PCT/CN2023/106386
(87) International publication number: WO 2024/012378

(57) **Abstract**

A communication method and apparatus are provided. The method includes: obtaining topology information of a satellite network, where the topology information includes information about a channel between satellites in the satellite network; and determining a first user plane network element based on the topology information, identification information of a satellite on which at least one user plane network element is located, and identification information of a satellite on which an access network device is located, where the first user plane network element is one of the at least one user plane network element. According to the foregoing method, an appropriate user plane network element can be selected in a multi-hop scenario of an inter-satellite link.

## Description

### CROSS-REFERENCE TO RELATED APPLICATIONS

This application claims priority to Chinese Patent Application No. 202210825273.4, filed with the China National Intellectual Property Administration on July 13, 2022 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

In a single-hop (single-hop) scenario of an inter-satellite link, a satellite serves as a transparent forwarding channel, most transmission links are in a terrestrial network, a user plane network element is deployed in the terrestrial network, and a session management network element may select an appropriate user plane network element for a session of a terminal device based on an existing protocol.

However, in a multi-hop (multi-hop) scenario of an inter-satellite link, a user plane network element may alternatively be deployed on a satellite, and a difference from a static terrestrial bearer network is that a status of the inter-satellite link is greatly affected by a topology of a satellite network. Therefore, in the multi-hop scenario of the inter-satellite link, how the session management network element selects an appropriate user plane network element is a concern.

### SUMMARY

This application provides a communication method and apparatus, to help a session management network element select an appropriate user plane network element in a multi-hop scenario of an inter-satellite link.

According to a first aspect, this application provides a communication method. The method includes: obtaining topology information of a satellite network, where the topology information includes information about a channel between satellites in the satellite network; and determining a first user plane network element based on the topology information, identification information of a satellite on which at least one user plane network element is located, and identification information of a satellite on which an access network device is located, where the first user plane network element is one of the at least one user plane network element. According to the foregoing design, a session management network element can select an appropriate user plane network element in a multi-hop scenario of an inter-satellite link.

In another possible design, topology information of a satellite network is obtained, where the topology information includes information about a channel between satellites in the satellite network; and a first user plane network element is determined based on the topology information, identification information of at least one user plane network element, and identification information of an access network device, where the first user plane network element is one of the at least one user plane network element.

In a possible design, when the topology information of the satellite network is obtained, a subscription message is sent to a network exposure network element, where the subscription message is used to subscribe to the topology information; and the topology information is received from the network exposure network element.

In a possible design, when the topology information of the satellite network is obtained, the topology information is obtained from the first user plane network element.

According to the foregoing design, the topology information may be obtained from the first user plane network element.

In a possible design, when the topology information of the satellite network is obtained, the topology information is obtained from a bearer network control plane network element.

According to the foregoing design, the topology information may be obtained from the bearer network control plane network element.

In a possible design, updated topology information of the satellite network is obtained; and a second user plane network element is determined based on the updated topology information of the satellite network, the identification information of the satellite on which the at least one user plane network element is located, and the identification information of the satellite on which the access network device is located, where the second user plane network element is one of the at least one user plane network element, and the second user plane network element is different from the first user plane network element.

In another possible design, updated topology information of the satellite network is obtained; and a second user plane network element is determined based on the updated topology information of the satellite network, the identification information of the at least one user plane network element, and the identification information of the access network device, where the second user plane network element is one of the at least one user plane network element, and the second user plane network element is different from the first user plane network element.

According to the foregoing design, when the topology information is updated, a new user plane network element may be determined based on the updated topology information.

In a possible design, when the first user plane network element is determined based on the topology information, the identification information of the satellite on which the at least one user plane network element is located, and the identification information of the satellite on which the access network device is located, the first user plane network element is determined based on the topology information, the identification information of the satellite on which the at least one user plane network element is located, the identification information of the satellite on which the access network device is located, and first information, where the first information includes at least one of location information of the at least one user plane network element, location information of the access network device, location information of a gateway, identification information of the gateway, and a data network access identifier.

In another possible design, when the first user plane network element is determined based on the topology information, the identification information of the at least one user plane network element, and the identification information of the access network device, the first user plane network element is determined based on the topology information, the identification information of the at least one user plane network element, the identification information of the access network device, and first information, where the first information includes at least one of location information of the at least one user plane network element, location information of the access network device, location information of a gateway, identification information of the gateway, and a data network access identifier.

According to the foregoing design, an appropriate user plane network element can be determined based on a plurality of types of information.

In a possible design, after the first user plane network element is determined, first path information is determined based on the topology information, the identification information of the satellite on which the access network device is located, identification information of a satellite on which the first user plane network element is located, the identification information of the gateway, and characteristic information of a data flow; and a first label is determined based on the characteristic information of the data flow, where the first path information indicates a transmission path of the data flow between the access network device and the gateway, and the first label is used to determine a link between any two adjacent satellite nodes on the transmission path indicated by the first path information.

In another possible design, after the first user plane network element is determined, first path information is determined based on the topology information, the identification information of the access network device, identification information of the first user plane network element, the identification information of the gateway, and characteristic information of a data flow; and a first label is determined based on the characteristic information of the data flow, where the first path information indicates a transmission path of the data flow between the access network device and the gateway, and the first label is used to determine a link between any two adjacent satellite nodes on the transmission path indicated by the first path information.

According to the foregoing design, the transmission path between the access network device and the gateway may be determined.

In a possible design, the first path information includes first identification information, and the first identification information indicates the transmission path indicated by the first path information, and/or identification information of a satellite node that the data flow passes through on the transmission path indicated by the first path information.

In a possible design, the first path information and the first label are sent to the access network device.

In a possible design, first indication information is sent to the access network device, where the first indication information indicates the access network device to add the first label and the first path information to a header of an uplink data packet of the data flow.

The first path information and the first label are added to the header of the uplink data packet, so that QoS performance of the uplink data packet transmitted between the access network device and the user plane network element can be ensured.

In a possible design, the first path information and the first label are sent to an application function network element.

In a possible design, second indication information is sent to the application function network element, where the second indication information indicates the application function network element to add the first label and the first path information to a header of a downlink data packet of the data flow.

The first path information and the first label are added to the header of the downlink data packet, so that QoS performance of the downlink data packet transmitted between the gateway and the user plane network element can be ensured.

In a possible design, the first path information and the first label are sent to the first user plane network element.

In a possible design, third indication information is sent to the first user plane network element, where the third indication information indicates the first user plane network element to forward the uplink data packet of the data flow received from the access network device to the application function network element, and forward the downlink data packet of the data flow received from the application function network element to the access network device.

In a possible design, after the first user plane network element is determined, second path information is determined based on the topology information, the identification information of the satellite on which the access network device is located, identification information of a satellite on which the first user plane network element is located, and characteristic information of a data flow; and a second label is determined based on the characteristic information of the data flow, where the second path information indicates a transmission path of the data flow between the access network device and the first user plane network element, and the second label is used to determine a link between any two adjacent satellite nodes on the transmission path indicated by the second path information.

In another possible design, after the first user plane network element is determined, second path information is determined based on the topology information, the identification information of the access network device, identification information of the first user plane network element, and characteristic information of a data flow; and a second label is determined based on the characteristic information of the data flow, where the second path information indicates a transmission path of the data flow between the access network device and the first user plane network element, and the second label is used to determine a link between any two adjacent satellite nodes on the transmission path indicated by the second path information.

According to the foregoing design, the transmission path between the access network device and the user plane network element may be determined.

In a possible design, the second path information includes second identification information, and the second identification information indicates the transmission path indicated by the second path information, and/or identification information of a satellite node that the data flow passes through on the transmission path indicated by the second path information.

In a possible design, the identification information of the satellite on which the first user plane network element is located is sent to the bearer network control plane network element; and third path information and a third label are received from the bearer network control plane network element, where the third path information indicates a transmission path of the data flow between the first user plane network element and the gateway, and the third label is used to determine a link between any two adjacent satellite nodes on the transmission path indicated by the third path information.

In another possible design, the identification information of the first user plane network element is sent to the bearer network control plane network element; and third path information and a third label are received from the bearer network control plane network element, where the third path information indicates a transmission path of the data flow between the first user plane network element and the gateway, and the third label is used to determine a link between any two adjacent satellite nodes on the transmission path indicated by the third path information.

According to the foregoing design, the bearer network control plane network element may determine the transmission path between the user plane network element and the gateway.

In a possible design, the third path information includes third identification information, and the third identification information indicates the transmission path indicated by the second path information, and/or identification information of a satellite node that the data flow passes through on the transmission path indicated by the third path information.

In a possible design, the second path information and the second label are sent to the access network device.

In a possible design, fourth indication information is sent to the access network device, where the fourth indication information indicates the access network device to add the second label and the second path information to a header of an uplink data packet of the data flow.

The second path information and the second label are added to the header of the uplink data packet, so that QoS performance of the uplink data packet transmitted between the access network device and the user plane network element can be ensured.

In a possible design, the second path information, the second label, the third path information, and the third label are sent to the first user plane network element.

In a possible design, fifth indication information is sent to the first user plane network element, where the fifth indication information indicates the first user plane network element to add the third label and the third path information to the header of the uplink data packet of the data flow received from the access network device and forward the uplink data packet of the data flow to an application function network element, and add the second label and the second path information to a header of a downlink data packet of the data flow received from the application function network element and forward the downlink data packet of the data flow to the access network device.

The foregoing method can ensure QoS performance of data packet transmission on an inter-satellite link.

In a possible design, the channel information includes one or more of the following: identification information of the satellites in the satellite network, identification information of the channel between the satellites in the satellite network, a delay of the channel between the satellites in the satellite network, a bandwidth of the channel between the satellites in the satellite network, and overheads of the channel between the satellites in the satellite network. The channel is an inter-satellite path, which may be understood as an inter-satellite link, for example, an inter-satellite link in a physical state or an inter-satellite link in a virtual state.

According to a second aspect, this application provides a communication method. The method includes: receiving identification information of a satellite on which a first user plane network element is located; determining third path information based on QoS requirement information, topology information of a satellite network, the identification information of the satellite on which the first user plane network element is located, and identification information of a gateway, and determining a third label based on the QoS requirement information, where the topology information includes information about a channel between satellites in the satellite network, the third path information indicates a transmission path, between the first user plane network element and the gateway, of a data flow corresponding to the QoS requirement information, and the third label is used to determine a link between any two adjacent satellite nodes on the path indicated by the third path information; and sending the third path information and the third label.

According to the foregoing design, the transmission path between the user plane network element and the gateway can be determined.

In another possible design, identification information of a first user plane network element is received; third path information is determined based on QoS requirement information, topology information of a satellite network, the identification information of the first user plane network element, and identification information of a gateway, and a third label is determined based on the QoS requirement information, where the topology information includes information about a channel between satellites in the satellite network, the third path information indicates a transmission path, between the first user plane network element and the gateway, of a data flow corresponding to the QoS requirement information, and the third label is used to determine a link between any two adjacent satellite nodes on the path indicated by the third path information; and the third path information and the third label are sent.

In a possible design, the method further includes: sending the topology information to a network exposure network element.

In a possible design, the method further includes: receiving the QoS requirement information from an application function network element.

In a possible design, the method further includes: sending the third path information and the third label to the application function network element.

In a possible design, the method further includes: sending sixth indication information to the application function network element, where the sixth indication information indicates the application function network element to add the third label and the third path information to a header of a downlink data packet of the data flow corresponding to the QoS requirement information.

The third path information and the third label are added to the header of the downlink data packet, so that QoS performance of the downlink data packet transmitted between the gateway and the user plane network element can be ensured.

In a possible design, the third path information includes third identification information, and the third identification information indicates the transmission path indicated by the second path information, and/or identification information of a satellite node that the data flow passes through on the transmission path indicated by the third path information.

In a possible design, the channel information includes one or more of the following: identification information of the satellites in the satellite network, identification information of the channel between the satellites in the satellite network, a delay of the channel between the satellites in the satellite network, a bandwidth of the channel between the satellites in the satellite network, and overheads of the channel between the satellites in the satellite network.

According to a third aspect, this application provides a communication method. The method includes: An access network device receives path information and a label, where the access network device is a node on a path indicated by the path information, and the label is used to determine a link between any two adjacent nodes on the path indicated by the path information. The access network device adds the path information and the label to a header of a received uplink data packet, to obtain a marked uplink data packet. The access network device sends the marked uplink data packet to a user plane network element.

The path information and the label are added to the header of the uplink data packet, so that QoS performance of the uplink data packet transmitted between the access network device and the user plane network element can be ensured.

In a possible design, the access network device receives indication information, where the indication information indicates to add the path information and the label to the header of the received uplink data packet.

In a possible design, the path information indicates a transmission path between the access network device and the user plane network element in a satellite network; or the path information indicates a transmission path between the access network device and a gateway in the satellite network.

In a possible design, the path information includes identification information of the path indicated by the path information, and/or identification information of a node included in the path indicated by the path information.

According to a fourth aspect, this application provides a communication method. The method includes: An application function network element receives path information and a label, where a gateway is a node on a path indicated by the path information, and the label is used to determine a link between any two adjacent nodes on the path indicated by the path information. The application function network element adds the path information and the label to a header of a downlink data packet, to obtain a marked downlink data packet. The application function network element sends the marked downlink data packet to the gateway.

The path information and the label are added to the header of the downlink data packet, so that QoS performance of the downlink data packet transmitted between the gateway and a user plane network element can be ensured.

In a possible design, the application function network element receives indication information, where the indication information indicates to add the path information and the label to the header of the downlink data packet.

In a possible design, the path information indicates a transmission path between an access network device and the gateway in a satellite network; or the path information indicates a transmission path between a user plane device and the gateway in the satellite network.

In a possible design, the path information includes identification information of the path indicated by the path information, and/or identification information of a node included in the path indicated by the path information.

According to a fifth aspect, this application provides a communication method. The method includes: A user plane network element receives path information 1, a label 1, path information 2, and a label 2, where the path information 1 indicates a transmission path between an access network device and the user plane network element, the path information 2 indicates a transmission path between the user plane network element and a gateway in a satellite network, the label 1 is used to determine a link between any two adjacent nodes on the path indicated by the path information 1, and the label 2 is used to determine a link between any two adjacent nodes on the path indicated by the path information 2. The user plane network element adds the path information 2 and the label 2 to a header of a received uplink data packet, to obtain a marked uplink data packet, and sends the marked uplink data packet to an application function network element. The user plane network element adds the path information 1 and the label 1 to a header of a received downlink data packet, to obtain a marked downlink data packet, and sends the marked downlink data packet to the access network device

The foregoing method can ensure QoS performance of data packet transmission on an inter-satellite link.

In a possible design, the user plane network element receives indication information, where the indication information indicates the first user plane network element to add the path information 2 and the label 2 to the header of the received uplink data packet and forward the uplink data packet to the application function network element, and add the path information 1 and the label 1 to the header of the received downlink data packet and forward the downlink data packet to the access network device.

In a possible design, the path information 1 includes identification information of the path indicated by the path information 1, and/or identification information of a node included in the path indicated by the path information 1. The path information 2 includes identification information of the path indicated by the path information 2, and/or identification information of a node included in the path indicated by the path information 2.

According to a sixth aspect, this application further provides an apparatus. The apparatus may perform the foregoing method designs. The apparatus may be a chip or a circuit that can perform functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method according to any one of the foregoing possible designs.

The apparatus may further include a communication interface, and the communication interface may be a transceiver. Alternatively, if the apparatus is a chip or a circuit, the communication interface may be an input/output interface of the chip, for example, an input/output pin.

In a possible design, the apparatus includes corresponding functional units for respectively implementing the steps in the foregoing method. The functions may be implemented by hardware, or may be implemented by hardware executing corresponding software. The hardware or the software includes one or more units corresponding to the foregoing functions.

According to a seventh aspect, this application provides a computer-readable storage medium. The computer-readable storage medium stores a computer program; and when the computer program is run on an apparatus, the method according to any one of the foregoing possible designs is performed.

According to an eighth aspect, this application provides a computer program product. The computer program product includes a computer program; and when the computer program is run on an apparatus, the method according to any one of the foregoing possible designs is performed.

### BRIEF DESCRIPTION OF DRAWINGS

FIG. 1 is a diagram of an architecture of a mobile communication system used in this application;
FIG. 2 is a diagram of a service-oriented architecture of a core network control plane according to this application;
FIG. 3 is a diagram of a transparent mode in which a satellite is used as an access technology according to this application;
FIG. 4A is a diagram 1 of a regeneration mode in which a satellite is used as an access technology according to this application;
FIG. 4B is a diagram 2 of a regeneration mode in which a satellite is used as an access technology according to this application;
FIG. 5 is a diagram of a topology structure of a satellite network according to this application;
FIG. 6 is a diagram of a possible application scenario according to an embodiment of this application;
FIG. 7 is an overview flowchart of a communication method according to this application;
FIG. 8A is a diagram in which a bearer network control plane network element serves as an AF network element according to this application;
FIG. 8B is a diagram in which a bearer network control plane network element serves as a functional module in OAM according to this application;
FIG. 8C is a diagram in which a satellite-borne UPF provides topology information of a satellite network for an SMF according to this application;
FIG. 9 is a diagram of a mapping relationship between a 5QI and a first label according to this application;
FIG. 10 is a diagram of a mapping relationship between a QoS requirement and a 5QI according to this application;
FIG. 11 is a flowchart 1 of service QoS guarantee based on a satellite-ground convergence network according to this application;
FIG. 12 is a flowchart 2 of service QoS guarantee based on a satellite-ground convergence network according to this application;
FIG. 13 is a flowchart 3 of service QoS guarantee based on a satellite-ground convergence network according to this application;
FIG. 14 is a flowchart 4 of service QoS guarantee based on a satellite-ground convergence network according to this application;
FIG. 15 is a diagram of a mapping relationship between a second label and a third label according to this application;
FIG. 16 is a diagram of path information and label storage according to this application;
FIG. 17 is a diagram 1 of a structure of a communication apparatus according to this application; and
FIG. 18 is a diagram 2 of a structure of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In this specification, the claims, and the accompanying drawings of this application, terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In descriptions of this application, unless otherwise specified, "/" means "or". For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one" means one or more, and "a plurality of" means two or more. In addition, "at least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

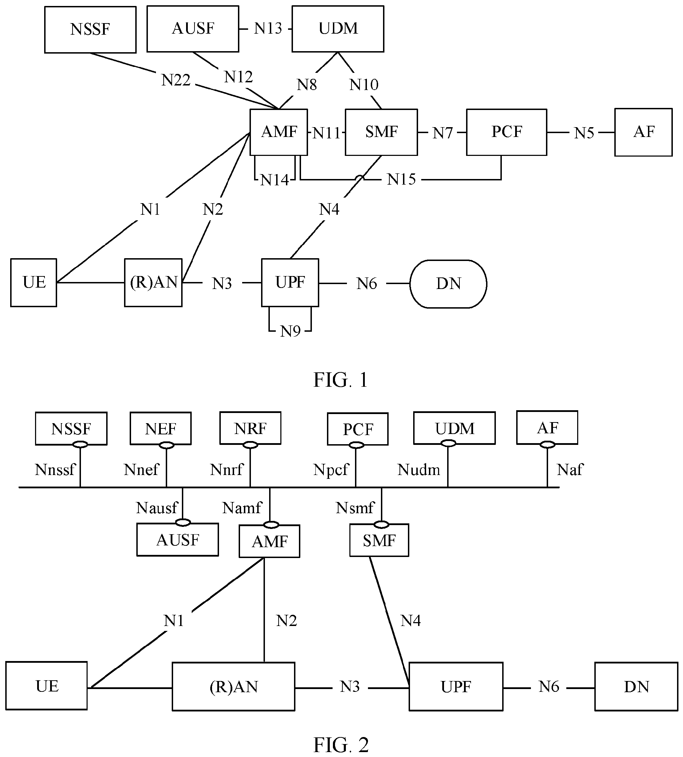

FIG. 1 shows an architecture of a 3rd generation partnership project (3rd generation partnership project, 3GPP) system. The system includes a terminal device (for example, user equipment (user equipment, UE)), an access network (access network, AN) device (for example, a radio access network (radio access network, RAN) device), a user plane function (user plane function, UPF) network element, a data network (data network, DN), an access and mobility management function (access and mobility management function, AMF), a session management function (session management function, SMF) network element, a unified data management (unified data management, UDM) network element, a unified data repository (unified data repository, UDR) network element, a policy control function (policy control function, PCF) network element, an application function (application function, AF) network element, a network slice selection function (network slice selection function, NSSF) network element, an authentication server function (authentication server function, AUSF) network element, and the like.

In addition, FIG. 1 further shows an interaction relationship between network function entities and a corresponding interface. For example, the UE and the AMF may interact with each other through an N1 interface. Interaction between other network function entities is similar, and details are not described herein again.

In addition, some interfaces between network function entities may be implemented in a manner of a service-oriented interface, as shown in FIG. 2. For example, a core network control plane uses a service-oriented architecture, and control plane network elements interact with each other in a service invoking manner to replace a point-to-point communication manner in a conventional architecture. In the service-oriented architecture, a control plane network element exposes a service to another control plane network element, so that the another control plane network element invokes the service. In point-to-point communication, a communication interface between control plane network elements stores a set of specific messages, and the messages can be used only when the control plane network elements at two ends of the interface perform communication.

In FIG. 1, the UE, the AN, the UPF, and the DN are generally referred to as user layer network function entities, user data traffic may be transmitted by using a protocol data unit (protocol data unit, PDU) session (PDU session) established between the UE and the DN, and a transmission path between the UE and the DN may further include the AN and the UPF. In FIG. 1, a network function entity other than the UE, the AN, the UPF, and the DN may be referred to as a control layer network function entity, and is mainly responsible for authentication and authorization, registration management, session management, mobility management, policy control, and other functions, so as to implement reliable and stable transmission of user layer traffic.

The following briefly describes the network function entities in the system shown in FIG. 1 and FIG. 2.

The terminal device is an ingress for a mobile user to interact with a network, and can provide a basic computing capability and storage capability, display a service window to the user, and receive an operation input of the user. A next-generation terminal device (NextGen UE) may establish a signal connection and a data connection to the RAN by using a new radio technology, to transmit a control signal and service data to a mobile network. The terminal device may include various handheld devices, vehicle-mounted devices, wearable devices, and computing devices that have a wireless communication function, or other processing devices connected to a wireless modem, and various forms of terminals, mobile stations (mobile station, MS), terminals (terminal), soft terminals, and the like, for example, water meters, electricity meters, and sensors.

The AN is deployed near the terminal device, provides a network access function for an authorized user in a specific area, and can determine transmission tunnels of different quality based on a user level, a service requirement, and the like to transmit user data. The AN can manage resources of the AN, properly use the resources, and provide an access service for the terminal device on demand; and is responsible for forwarding a control signal and user data between the terminal device and the core network.

The DN is a data network that provides a business service for the user. Generally, a client is located on the terminal device, and a server is located on the data network. The data network may be a private network, for example, a local area network, or may be an external network that is not managed or controlled by an operator, for example, the internet (Internet), or may be a dedicated network jointly deployed by operators, for example, a network that provides an IP multimedia network subsystem (IP multimedia core network subsystem, IMS) service.

The core network is responsible for maintaining subscription data of the mobile network, managing a network element of the mobile network, and providing session management, mobility management, policy management, security authentication, and other functions for the terminal device. The core network provides network access authentication for the terminal device when the terminal device is attached, allocates a network resource to the terminal device when the terminal device has a service request, updates the network resource for the terminal device when the terminal device moves, provides a fast recovery mechanism for the terminal device when the terminal device is idle, releases the network resource for the terminal device when the terminal device is detached, and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device. The core network user plane includes a UPF, and the core network control plane includes an AMF, an SMF, a network exposure function (network exposure function, NEF), an NRF, a UDM, an NSSF, an AUSF, a PCF, an AF, and the like.

The following briefly describes functions of network function entities in the core network.
1. A session management network element is mainly used for session management, terminal device IP address allocation and management, selection of a manageable user equipment plane function, termination of interfaces towards policy control or charging functions, downlink data notification, and the like. In 5G communication, the session management network element may be an SMF network element. In future communication such as 6G communication, the session management function network element may still be the SMF network element or have another name. This is not limited in this application. Nsmf is a service-based interface provided by the SMF. The SMF may communicate with another network function through Nsmf.
2. An access management network element is mainly used for mobility management, access management, and the like. For example, the access management network element may be a mobility management entity (mobility management entity, MME) function in a 4G communication network or an AMF network element in a 5G network. In future communication such as 6G communication, the access management network element may still be the AMF network element or have another name. This is not limited in this application. Namf is a service-based interface provided by the AMF. The AMF may communicate with another network function through Namf.
3. A network exposure network element is mainly configured to securely expose, to the outside, a service, a capability, and the like that are provided by a 3GPP network function. In 5G communication, the network exposure network element may be an NEF network element. In future communication such as 6G communication, the network exposure network element may still be the NEF network element or have another name. This is not limited in this application. Nnef is a service-based interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In 5G communication, the network repository network element may be an NRF network element. In future communication such as 6G communication, the network repository network element may still be the NRF network element or have another name. This is not limited in this application. Nnrf is a service-based interface provided by the NRF. The NRF may communicate with another network function through Nnrf.
5. A policy control network element is configured to: guide a unified policy framework for network behavior, and provide policy rule information and the like for a control plane function network element (for example, the AMF or the SMF). In 5G communication, the policy control network element may be a PCF network element. In future communication such as 6G communication, the policy control network element may still be the PCF network element or have another name. This is not limited in this application. Npcf is a service-based interface provided by the PCF. The PCF may communicate with another network function through Npcf.
6. A data management network element is used for user identifier processing, subscription, access authentication, registration, mobility management, or the like. In 5G communication, the data management network element may be a UDM network element. In future communication such as 6G communication, the data management network element may still be the UDM network element or have another name. This is not limited in this application. Nudm is a service-based interface provided by the UDM. The UDM may communicate with another network function through Nudm.
7. An application network element is configured to: perform application-affected data routing, access the network exposure function, interact with a policy framework to perform policy control, or the like. In 5G communication, the application network element may be an AF network element. In future communication such as 6G communication, the application network element may still be the AF network element or have another name. This is not limited in this application. Naf is a service-based interface provided by the AF. The AF may communicate with another network function through Naf.
8. A user plane network element is used for packet routing and forwarding, quality of service (quality of service, QoS) handling for user plane data, or the like. In 5G communication, the user plane network element may be a UPF network element. In future communication such as 6G communication, the user plane network element may still be the UPF network element or have another name. This is not limited in this application.
9. An authentication server network element is mainly used for user authentication or the like. In 5G communication, the authentication server network element may be an AUSF network element. In future communication such as 6G communication, the authentication server network element may still be the AUSF network element or have another name. This is not limited in this application. Nausf is a service-based interface provided by the AUSF. The AUSF may communicate with another network function through Nausf.
10. A network slice selection function network element is configured to select a network slice for the terminal device. In 5G communication, the network slice selection function network element may be an NSSF network element. In future communication such as 6G communication, the network slice selection function network element may still be the NSSF network element or have another name. This is not limited in this application.

It may be understood that the core network may further include another network function entity. This is not limited in this application.

The technical solutions provided in embodiments of this application may be applied to various communication systems. For example, the technical solutions may be applied to a 5G system, or may be applied to another future-oriented new system, for example, a 6G system. This is not limited in embodiments of this application. In addition, terms "system" and "network" are interchangeable.

For ease of understanding of embodiments of this application, several basic concepts in embodiments of this application are briefly described.

### 1. Space-air-ground integration

A space-air-ground integrated network consists of three parts: a space-based network including various orbital satellites, an air-based network including aircrafts, and a conventional ground-based network. The ground-based network further includes a cellular wireless network, a satellite terrestrial station, a mobile satellite terminal, a terrestrial data and processing center, and the like.

It may be understood that a space-ground network may be a space-air-ground integrated network, which is equivalent to integration of a space-based network and a ground-based network. An architecture of the space-ground network can be classified into three types: a space-satellite-ground network, a space-based network, and a skynet-earthnet.

In the space-satellite-ground network, a satellite serves as a transparent forwarding channel to transmit data to a terrestrial network for processing. Because the data is transmitted to the terrestrial network for processing, the space-satellite-ground network requires that terrestrial gateways be deployed densely enough.

In the space-based network, data exchange, data processing, and network control capabilities are placed on a satellite, which weakens a requirement for the terrestrial network. Because the data exchange, data processing, and network control capabilities are placed on the satellite, the space-based network has a high requirement for a processing capability on the satellite.

In the skynet-earthnet, a sky network uses inter-satellite links for networking, and most network management and control functions are implemented in a ground network. The skynet-earthnet using the inter-satellite links is a possible research direction in the future.

In terms of service requirements, the space-air-ground integrated network also aims to meet requirements of different service types, including:
enhanced mobile broadband (enhanced Mobile Broadband, eMBB) (for example, in a region in which 5G coverage is difficult (such as a cruise ship or a polar region));
ultra-reliable and low latency communications (ultra-reliable and low latency communications, URLLC) (for example, for long-distance ultra-low latency scenarios (such as transactions with international financial institutions)); and
massive internet of things communication (massive machine-type communications, mMTC) (for example, for an internet of things application scenario that has a low latency requirement, such as an ocean or a desert).

Therefore, a related policy needs to be provided to ensure that the space-air-ground integrated network can meet QoS requirements of different services.

Currently, research on a non-terrestrial network in a 5GS in the standard is as follows:

There are three types of test cases for a satellite access network:
service continuity: resolving a problem that a user continuously accesses a 5G system when the user moves between a satellite and the terrestrial network;
service universality: aiming to obtain a 5G service in a region in which a service is unavailable or insufficient; and
service expansion: using wide coverage of a satellite to broadcast non-time-sensitive data, thereby reducing a burden on the terrestrial network.

### 2. Transparent mode in which a satellite is used as an access technology and regeneration mode in which a satellite is used as an access technology

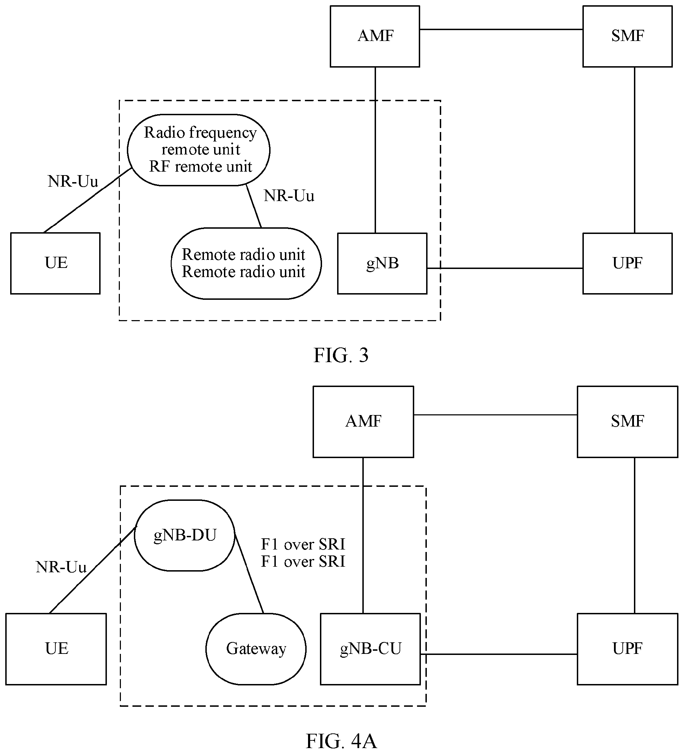

If the transparent mode is used during satellite access, a satellite serves only as a transparent forwarding channel and does not have a satellite-borne data processing capability, thereby avoiding pressure of signaling exchange between interfaces when the satellite moves at a high speed, as shown in FIG. 3.

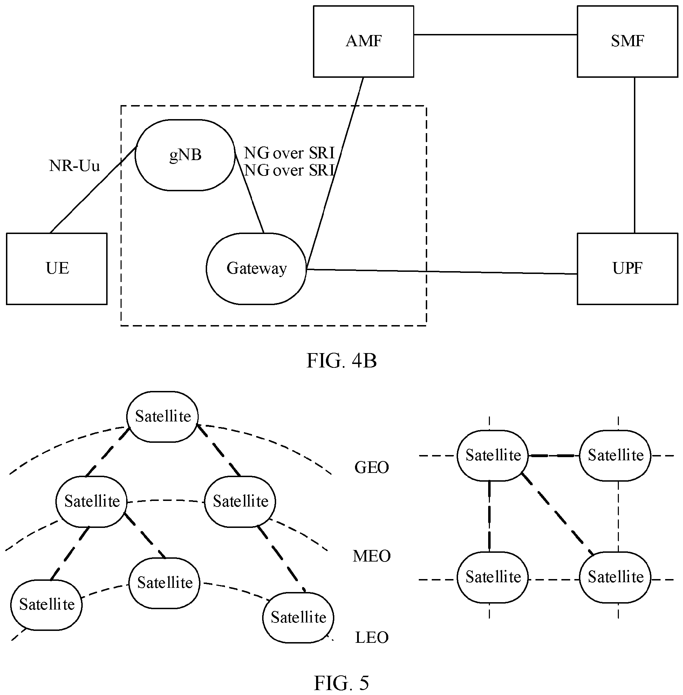

If the regeneration mode is used during satellite access, a satellite serves as a next-generation NodeB (next-generation NodeB, gNB) or a gNB-distributed unit (distributed unit, DU) in a 5G mobile communications system and has a satellite-borne data processing capability. In addition, more core network elements may be deployed on the satellite. As shown in FIG. 4A, the gNB-DU is deployed on the satellite. As shown in FIG. 4B, the gNB is deployed on the satellite.

In a single-hop scenario of the inter-satellite link, a satellite serves as a transparent forwarding channel, and most transmission links are on the terrestrial network. Therefore, a bearer network quality of service (quality of server, QoS) slice guarantee technology can be used reserve resources to guarantee different services. However, this manner requires a long pre-configuration time, and is only for some high-value services.

However, in a multi-hop (multi-hop) scenario of an inter-satellite link, a difference from a relatively static terrestrial bearer network is that an inter-satellite link state is greatly affected by a topology of a satellite network.

For example, in a topology structure of the satellite network shown on the left in FIG. 5, a plurality of satellites in the satellite network may be at different layers, where a single-hop transmission delay of a satellite from a low-earth orbit (low-earth orbit, LEO) to a medium-earth orbit (medium-earth orbit, MEO) is 18.3 ms to 82.3 ms, and a single-hop transmission delay of a satellite from the MEO to a geostationary earth orbit (geostationary earth orbit, GEO) is 36.0 ms to 96.0 ms.

For another example, in a topology structure of the satellite network shown on the right in FIG. 5, a plurality of satellites in the satellite network may be in different orbits or in a same orbit, and a single-hop transmission delay of two satellites in a same orbit is less than a single-hop transmission delay of two satellites in different orbits.

It can be learned from FIG. 5 that the topology structure of the satellite network has a great impact on a transmission delay of the inter-satellite link.

In addition, a 5G QoS identifier (5G QoS identifier, 5QI) parameter of a satellite link is set to a non-guarantee bit rate (Non-guarantee bit rate, Non-GBR) currently, which means that a current standard can only ensure that the link is basically reachable and cannot meet a more complex service requirement.

As described above, a flexible topology structure of the satellite network brings great pressure on QoS guarantee for inter-satellite link selection. In addition, it is difficult to use a conventional bearer network slice guarantee technology that requires a long configuration time in this case. Therefore, how to ensure QoS of a data flow transmitted through an inter-satellite link in a multi-hop scenario of the inter-satellite link is also a concern.

The following describes possible application scenarios of embodiments of this application.

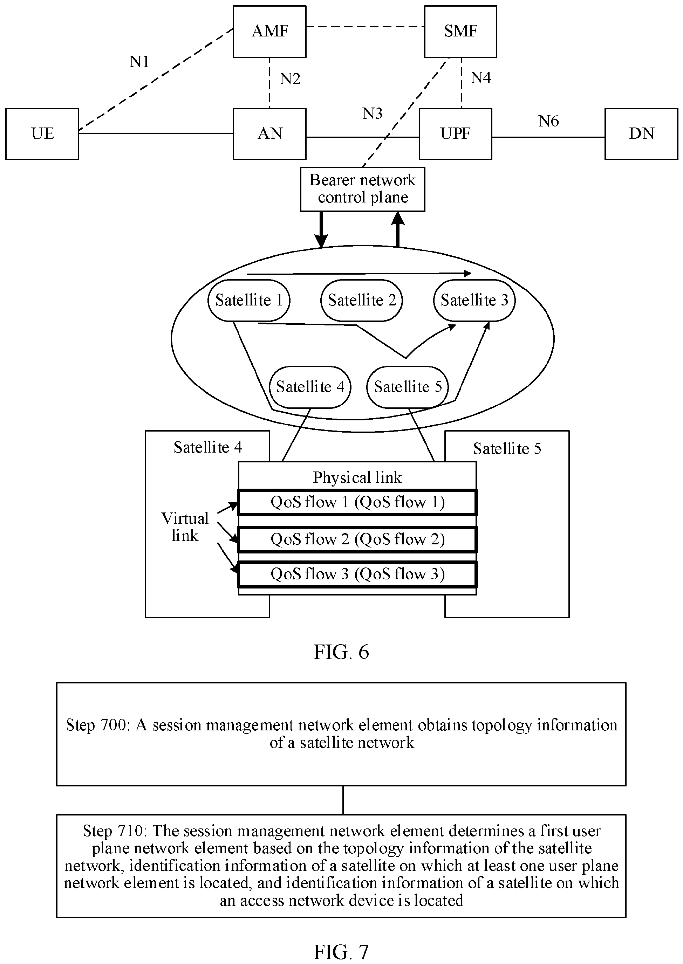

As shown in FIG. 6, in an embodiment of this application, both an access network device and a user plane network element are satellite-borne. In other words, both the access network device and the user plane network element are deployed on a satellite. In a user plane data transmission process, uplink data and downlink data from the access network device to the user plane network element need to pass through a multi-hop inter-satellite link. In other words, a transmission path from the access network device to the user plane network element may include one or more satellites. It can be learned from a satellite in a range shown by a circle in FIG. 6 that a satellite 1 to a satellite 3 may include a plurality of paths. A plurality of links may further exist between any two adjacent satellites on each path, and different links correspond to different QoS requirements. As shown in FIG. 6, there are three links between a satellite 4 and a satellite 5.

In addition, in the user plane data transmission process, uplink data and downlink data from the UPF to a DN may also need to pass through a multi-hop inter-satellite link.

In a transparent mode, a satellite serves as a transparent forwarding channel, a RAN is on the ground, and a UPF may be selected based on a DN corresponding to the satellite. However, in a regeneration mode, in a scenario in which both the RAN and the UPF are satellite-borne, an inter-satellite link state has a great impact on an N3 link between the UPF and the RAN. Therefore, how to select an appropriate UPF based on the inter-satellite link when both the UPF and the RAN are satellite-borne is a concern.

This application provides a communication method, to help a session management network element select an appropriate user plane network element in a multi-hop scenario of an inter-satellite link, and ensure QoS guarantee of a data flow transmitted through the inter-satellite link. As shown in FIG. 7, the method includes the following steps.

Step 700: The session management network element obtains topology information of a satellite network.

It may be understood that the session management network element may alternatively be replaced with another core network control plane network element, for example, an access management network element. This is not limited in this application. The following uses only the session management network element as an example for description.

For example, the topology information of the satellite network includes information about a channel between satellites in the satellite network. The channel information may indicate a connection relationship between a plurality of satellites in the satellite network and a link state. Specifically, the channel information may include one or more of the following:
identification information of the satellites in the satellite network, identification information of the channel between the satellites in the satellite network, a delay of the channel between the satellites in the satellite network, a bandwidth of the channel between the satellites in the satellite network, and overheads of the channel between the satellites in the satellite network.

In a possible implementation method, the topology information further includes satellite information, for example, a satellite load.

In a possible implementation method, the topology information further includes a mapping relationship between identification information of a satellite and identification information of an access network device on the satellite. Satellites that have a capability of the access network device or that are provided with the access network device may be learned based on the mapping relationship.

It may be understood that the channel information may further include other content. This is not limited in this application.

The following describes a possible implementation in which the session management network element obtains the topology information of the satellite network.

Manner 1: A bearer network control plane network element may provide the topology information of the satellite network for the session management network element.

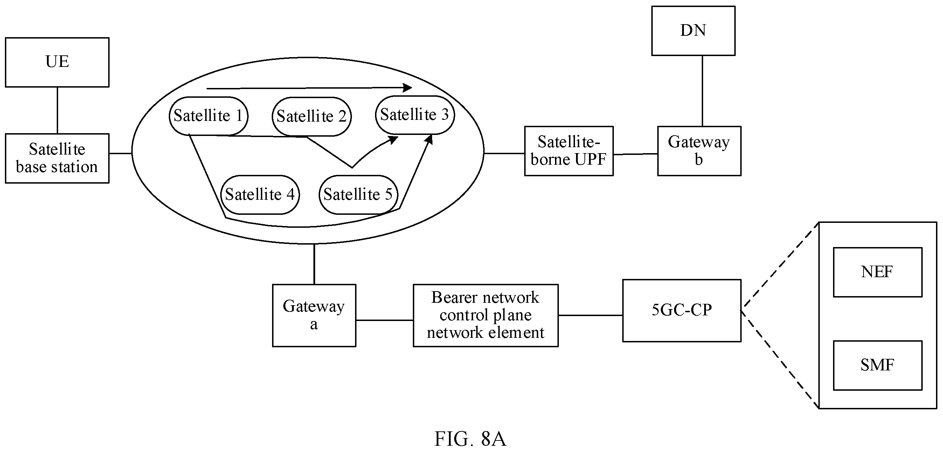

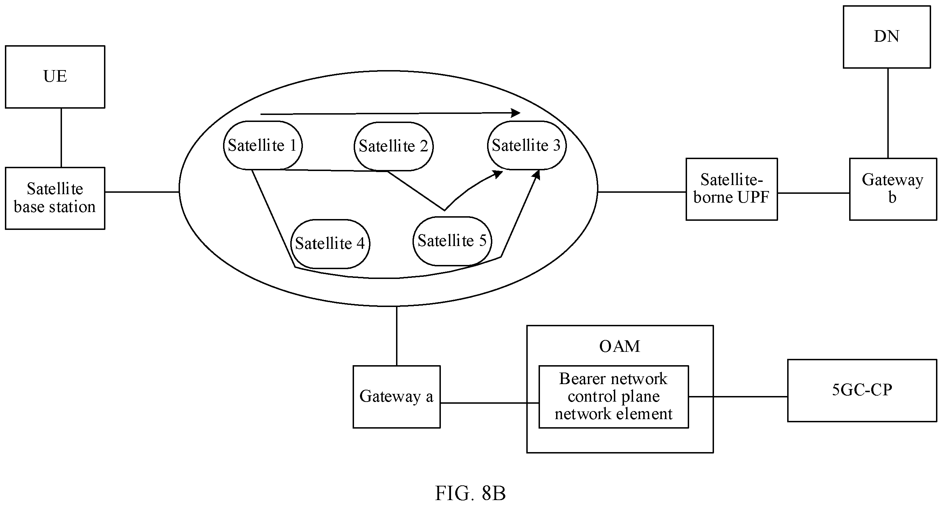

The bearer network control plane network element may be a software defined networking controller (software defined networking controller, SDN controller). The bearer network control plane network element may be an independent AF network element, and communicates with the session management network element by using a network exposure network element, as shown in FIG. 8A. Alternatively, the bearer network control plane network element may be a functional module in operation, administration and maintenance (Operation, Administration and Maintenance, OAM). As shown in FIG. 8B, the OAM may directly communicate with the session management network element. A gateway is a gateway that connects the satellite network to a terrestrial core network and another control module. A gateway a connects a satellite on the sky to a bearer network control plane network element on the ground. A gateway b connects a satellite on the sky to a 5G core control plane (5G Core control plane, 5GC-CP) network element on the ground.

In a possible implementation, the session management network element may send a subscription request message to the network exposure network element, where the subscription request message is used to request topology information of a new satellite network. The network exposure network element receives the topology information of the satellite network from the bearer network control plane network element or an application function network element, and sends a subscription response message to the session management network element, where the subscription response message includes the topology information of the satellite network. For example, the network exposure network element may periodically send the topology information of the satellite network to the session management network element.

The subscription message may be an event exposure subscription request (Nnef_EventExposure_Subscribe Request) message. The subscription message may include a non-terrestrial network topology event (non-terrestrial network topology event) field, and the field indicates to subscribe to the topology information of the satellite network. Correspondingly, the topology information of the satellite network that is sent by the network exposure network element to the session management network element may be carried in an event exposure subscription response (Nnef_EventExposure_Subscribe Response) message.

In a possible implementation, the bearer network control plane network element may actively send the topology information of the satellite network to the network exposure network element, to trigger the network exposure network element to send the topology information of the satellite network to the session management network element. For example, when the topology information of the satellite network changes, the bearer network control plane network element sends an AF request (AF request) message to the network exposure network element, where the AF request message includes the topology information of the satellite network. The network exposure network element sends the topology information of the satellite network to the session management network element based on the AF request message.

Manner 2: A user plane network element that previously communicates with the session management network element may provide the topology information of the satellite network for the session management network element.

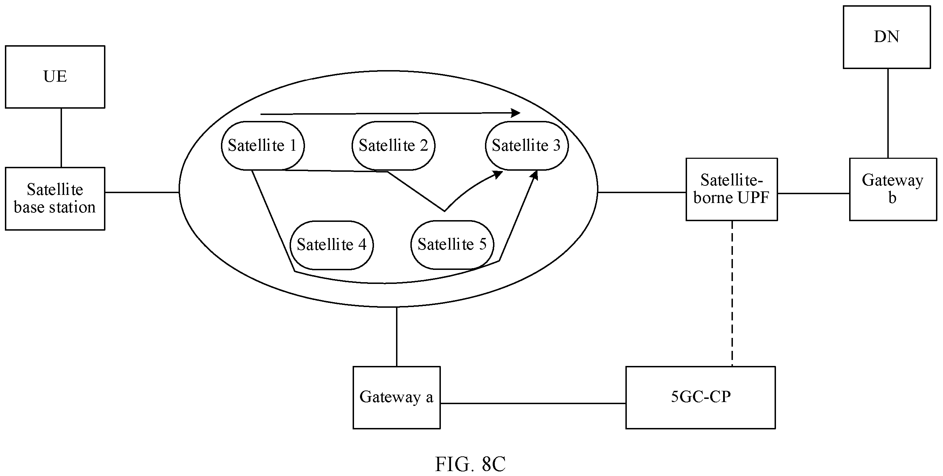

It may be understood that the user plane network element that previously communicates with the session management network element may be a first user plane network element or another user plane network element. This is not limited in this application. As shown in FIG. 8C, a satellite-borne UPF may provide the topology information of the satellite network for the SMF.

For example, a satellite router in which the user plane network element is located may obtain the topology information of the satellite network in a border gateway protocol-link state (border gateway protocol-link state, BGP-LS) manner, and send the topology information to the user plane network element through an internal interface; and the user plane network element sends the topology information of the satellite network to the session management network element. For example, the user plane network element sends an N4 message (N4 message) to the session management network element, where the N4 message includes the topology information of the satellite network.

Manner 3: An access network device may provide the topology information of the satellite network for the session management network element.

For example, a satellite router in which the access network device is located may obtain the topology information of the satellite network in a BGP-LS manner, and send the topology information to the access network device through an internal interface; and the access network device sends the topology information of the satellite network to the session management network element by using an access and mobility management function network element. For example, the access network device sends an N2 message (N2 message) to the access and mobility management function network element, where session management content (SM content) in the N2 message includes the topology information of the satellite network.

Step 710: The session management network element determines the first user plane network element based on the topology information of the satellite network, identification information of a satellite on which at least one user plane network element is located, and identification information of a satellite on which an access network device is located, where the first user plane network element is one of the at least one user plane network element.

The session management network element may obtain identification information of the access network device and identification information of the at least one user plane network element. Further, the session management network element may determine, based on the obtained identification information of the access network device and a correspondence between identification information of an access network device and identification information of a satellite, the identification information of the satellite on which the access network device is located, and determine, based on the obtained identification information of the at least one user plane network element and a correspondence between identification information of a user plane network element and identification information of a satellite, the identification information of the satellite on which the at least one user plane network element is located. The correspondence between identification information of an access network device and identification information of a satellite and the correspondence between identification information of a user plane network element and identification information of a satellite may be configured in the session management network element in advance, or may be included in the topology information.

In a possible design, the session management network element may determine, based on the topology information of the satellite network, the identification information of the satellite on which the at least one user plane network element is located, and the identification information of the satellite on which the access network device is located, that there is at least one transmission path between the access network device and the first user plane network element, and that there is no transmission path between the access network device and a user plane network element other than the first user plane network element in the at least one user plane network element. The session management network element determines that the first user plane network element is a finally selected user plane network element.

For example, the topology information of the satellite network may indicate that there is a channel between a satellite A, a satellite B, and a satellite C, and that there is a channel between the satellite B, the satellite C, and a satellite D. If a satellite on which a RAN is located is the satellite A, a satellite on which UPF1 is located is the satellite C, and a satellite on which UPF2 is located is the satellite D, the SMF determines, based on the topology information of the satellite network, identification information of the satellite on which the RAN is located (namely, identification information of the satellite A), identification information of the satellite on which UPF1 is located (namely, identification information of the satellite C), and identification information of the satellite on which UPF2 is located (namely, identification information of the satellite D), that there is a transmission path between the RAN and UPF1 (which can be learned from that there is a channel between the satellite A, the satellite B, and the satellite C), and that there is no transmission path between the RAN and UPF2. In this case, the SMF does not select UPF2, and determines that UPF1 is a finally selected UPF.

It may be understood that the foregoing example is merely for description, and is not intended to limit this application. There may be one or more transmission paths between the RAN and UPF1.

In a possible design, the session management network element may alternatively determine the first user plane network element based on the topology information, the identification information of the satellite on which the at least one user plane network element is located, the identification information of the satellite on which the access network device is located, and first information, where the first information includes at least one of location information of the at least one user plane network element, location information of the access network device, location information of a gateway, identification information of the gateway, and a data network access identifier (data network access identifier, DNAI).

The location information of the at least one user plane network element may include ephemeris information of the at least one user plane network element. The location information of the access network device may include ephemeris information of the access network device. The ephemeris information is used to determine a satellite location, for example, longitude and latitude information. For details, refer to TS 38.821 7.3.6.

It may be understood that the location information of the gateway may include location information of one or more gateways, and correspondingly the identification information of the gateway may include identification information of the one or more gateways. There may be one or more DNAIs.

For example, when the session management network element selects a user plane network element from the at least one user plane network element based on the topology information, the identification information of the satellite on which the at least one user plane network element is located, the identification information of the satellite on which the access network device is located, the location information of the at least one user plane network element, and the location information of the access network device, the session management network element may calculate a distance between the at least one user plane network element and the access network device based on the foregoing information, to determine a minimum distance. In this case, the first user plane network element is a user plane network element closest to the access network device, that is, a user plane network element corresponding to the minimum distance.

For example, the access network device is represented by a RAN, and the at least one user plane network element is represented by UPF_1, UPF_2, ..., and UPF_N, where N is a positive integer. In this case, the session management network element determines the following based on the foregoing information:
Min {distance (RAN to UPF_1), distance (RAN to UPF_2), ..., distance (RAN to UPF _N)}

For example, if distance (RAN to UPF_1) is a minimum value, the session management network element determines UPF_1.

For example, when the session management network element selects a user plane network element from the at least one user plane network element based on the topology information, the identification information of the satellite on which the at least one user plane network element is located, the identification information of the satellite on which the access network device is located, the location information of the at least one user plane network element, the location information of the access network device, the location information of the gateway, and the identification information of the gateway, the session management network element may calculate a distance between the at least one user plane network element and the access network device and a distance between the at least one user plane network element and one or more gateways based on the foregoing information, and add a distance between one user plane network element and the access network device and a distance between the same user plane network element and the one or more gateways, to determine a minimum distance sum. In this case, the first user plane network element is a user plane network element corresponding to the minimum distance sum.

For example, the access network device is represented by a RAN, and the at least one user plane network element is represented by UPF_1, UPF_2, ..., and UPF_N, where N is a positive integer, and a quantity of gateways is 1. In this case, the session management network element determines the following based on the foregoing information: Min {distance (RAN to UPF_1) + distance (UPF_1 to gateway), distance (RAN to UPF_2) + distance (UPF_2 to gateway), ..., distance (RAN to UPF_N) + distance (UPF_N to gateway) }

For example, if distance (RAN to UPF_1) + distance (UPF_1 to gateway) is a minimum value, the session management network element determines UPF_1.

For another example, the access network device is represented by a RAN, and the at least one user plane network element is represented by UPF_1, UPF_2, ..., and UPF_N, where N is a positive integer, and a quantity of gateways is K. In this case, the session management network element determines the following based on the foregoing information: Min {distance (RAN to UPF_1) + distance (UPF_1 to gateway 1), distance (RAN to UPF_1) + distance (UPF_1 to gateway 2), ..., distance (RAN to UPF_1) + distance (UPF_1 to gateway K)}; Formula (1-1); Min{ distance (RAN to UPF_2) + distance (UPF_2 to gateway 1), distance (RAN to UPF_2) + distance (UPF_2 to gateway 2), ..., distance (RAN to UPF_2) + distance (UPF_2 to gateway K)}; Formula (1-2) ... Min{ distance (RAN to UPF_N) + distance (UPF_N to gateway 1), distance (RAN to UPF_N) + distance (UPF_N to gateway 2), ..., distance (RAN to UPF_N) + distance (UPF_N to gateway K)}; Formula (1-K)

For example, if distance (RAN to UPF_1) + distance (UPF_1 to gateway 1) is a minimum value of Formula (1-1) to Formula (1-K), the session management network element determines UPF_1.

For example, when the session management network element selects a user plane network element from the at least one user plane network element based on the topology information, the identification information of the satellite on which the at least one user plane network element is located, the identification information of the satellite on which the access network device is located, the location information of the at least one user plane network element, the location information of the gateway, and the identification information of the gateway, the session management network element may calculate a distance between the at least one user plane network element and one or more gateways based on the foregoing information, to determine a minimum distance. In this case, the first user plane network element is a user plane network element corresponding to the minimum distance.

For example, the at least one user plane network element is represented by UPF_1, UPF_2, ..., and UPF_N, where N is a positive integer, and a quantity of gateways is 1. In this case, the session management network element determines the following based on the foregoing information:
Min{ distance (UPF_1 to gateway), distance (UPF_2 to gateway), ..., distance (UPF_N to gateway)}

For example, if distance (UPF_1 to gateway) is a minimum value, the session management network element determines UPF_1.

For another example, the at least one user plane network element is represented by UPF_1, UPF_2, ..., and UPF_N, where N is a positive integer, a quantity of gateways is K, and K is a positive integer greater than or equal to 2. In this case, the session management network element determines the following based on the foregoing information: Min{distance (UPF_1 to gateway 1), distance (UPF_1 to gateway 2), ..., distance (UPF_1 to gateway K)}; Formula (2-1) Min{distance (UPF_2 to gateway 1), distance (UPF_2 to gateway 2), ..., distance (UPF_2 to gateway K)}; Formula (2-2) ... Min{distance (UPF_N to gateway 1), distance (UPF_N to gateway 2), ..., distance (UPF_N to gateway K)}; Formula (2-K)

For example, if distance (UPF_1 to gateway 1) is a minimum value of Formula (2-1) to Formula (2-K), the session management network element determines UPF_1.

For example, when the session management network element selects a user plane network element from the at least one user plane network element based on the topology information, the identification information of the satellite on which the at least one user plane network element is located, the identification information of the satellite on which the access network device is located, the location information of the at least one user plane network element, the location information of the gateway, the identification information of the gateway, and DNAI, the session management network element may calculate a distance between the at least one user plane network element and one or more gateways and a distance between the one or more gateways and one or more DNs based on the foregoing information, and add a distance between one gateway and a user plane network element and a distance between the same gateway and the one or more DNs, to determine a minimum distance sum. In this case, the first user plane network element is a user plane network element corresponding to the minimum distance sum.

For example, the at least one user plane network element is represented by UPF_1, UPF_2, ..., and UPF_N, where N is a positive integer, a quantity of gateways is 1, and a quantity of DNAIs is 1. In this case, the session management network element determines the following based on the foregoing information: Min {distance (gateway to DN) + distance (UPF_1 to gateway), distance (gateway to DN), + distance (UPF_2 to gateway), ..., distance (gateway to DN), + distance (UPF_N to gateway)}

For example, if distance (gateway to DN) + distance (UPF_1 to gateway) is a minimum value, the session management network element determines UPF_1.

For another example, the at least one user plane network element is represented by UPF_1, UPF_2, ..., and UPF_N, where N is a positive integer, a quantity of gateways is K, K is a positive integer greater than or equal to 2, and a quantity of DNAIs is 1. In this case, the session management network element determines the following based on the foregoing information: Min{ distance (gateway 1 to DN) + distance (UPF_1 to gateway 1), distance (gateway 1 to DN) + distance (UPF_2 to gateway 1), ..., distance (gateway 1 to DN) + distance (UPF_N to gateway 1)}; Formula (3-1) Min{ distance (gateway 2 to DN) + distance (UPF_1 to gateway 2), distance (gateway 2 to DN) + distance (UPF_2 to gateway 2), ..., distance (gateway 2 to DN) + distance (UPF_N to gateway 2)}; Formula (3-2) Min{ distance (gateway K to DN) + distance (UPF_1 to gateway K), distance (gateway K to DN) + distance (UPF_2 to gateway K), ..., distance (gateway K to DN) + distance (UPF_N to gateway K)}; Formula (3-K)

For example, if distance (gateway 1 to DN) + distance (UPF_1 to gateway 1) is a minimum value of Formula (3-1) to Formula (3-K), the session management network element determines UPF_1.

For example, when the session management network element selects a user plane network element from the at least one user plane network element based on the topology information, the identification information of the satellite on which the at least one user plane network element is located, the identification information of the satellite on which the access network device is located, the location information of the at least one user plane network element, the location information of the gateway, the identification information of the gateway, and the DNAI, the session management network element may calculate a distance between the at least one user plane network element and the access network device, a distance between the at least one user plane network element and the gateway, and a distance between the gateway and the DN based on the foregoing information, and add a distance between each user plane network element and the access network device, a distance between the user plane network element and the gateway, and a distance between the gateway and the DN, to determine a minimum distance sum. In this case, the first user plane network element is a user plane network element corresponding to the minimum distance sum. In this case, there may be one or more gateways, and there may be one or more DNs. This is not limited in this application.

According to the foregoing design, an appropriate user plane network element can be selected when the user plane network element and the access network device are deployed in the satellite network.

In addition, after determining the first user plane network element, the session management network element further needs to determine a transmission path of the data flow and a label used to ensure QoS of the data flow. The transmission path of the data flow includes a satellite node that the data flow passes through, and the label used to ensure QoS of the data flow is used to determine, in a plurality of links that exist in adjacent satellite nodes that the data flow passes through, a link that meets a QoS requirement of the data flow.

In a first possible implementation, the transmission path of the data flow is a transmission path between the access network device and the gateway, and is denoted as a first path, and the label used to ensure QoS of the data flow is denoted as a first label.

For example, after determining the first user plane network element, the session management network element further needs to determine first path information and the first label, and send the first path information and the first label to the access network device, the first user plane network element, and the application function network element. The first path information indicates a transmission path of the data flow between the access network device and the gateway, and the first label is used to determine a link between any two adjacent satellite nodes on the transmission path indicated by the first path information.

The first path information includes first identification information, and the first identification information indicates the transmission path indicated by the first path information (that is, the first identification information is identification information of the transmission path indicated by the first path information), and/or identification information of a satellite node that the data flow passes through on the transmission path indicated by the first path information.

For example, the session management network element determines the first path information based on the topology information of the satellite network, the identification information of the satellite on which the access network device is located, the identification information of the satellite on which the first user plane network element is located, the identification information of the gateway, and characteristic information of the data flow. The session management network element determines the first label based on the characteristic information of the data flow. For example, the characteristic information of the data flow includes a resource type of the data flow and/or a priority of the data flow. The resource type includes, for example, a video stream and an audio stream, and the priority may be represented by using a 5G QoS identifier (5G QoS identifier, 5QI) and QoS requirement information.

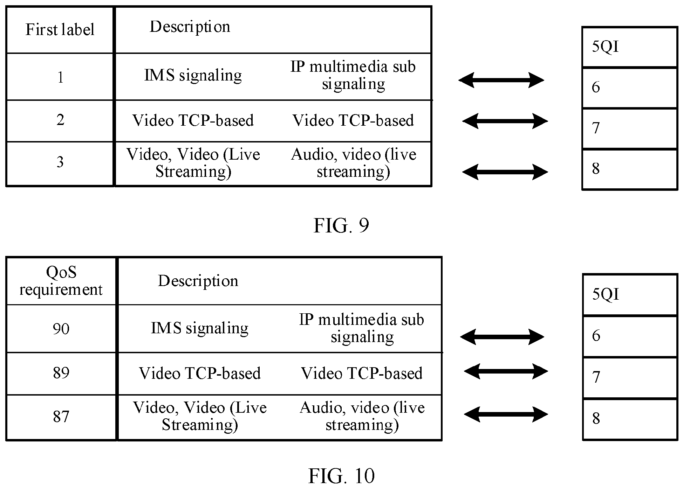

There is a mapping relationship between characteristic information of a data flow and a first label, and the session management network element may store the mapping relationship in advance. FIG. 9 is a diagram of a mapping relationship between a 5QI and a first label when the characteristic information of the data flow is a 5QI. For example, the session management network element may determine a corresponding first label based on the 5QI of the data flow and the mapping relationship shown in FIG. 9.

Optionally, in a possible variation of the first possible implementation, after the session management network element determines the first user plane network element, the session management network element sends, to the bearer network control plane network element, the identification information of the satellite on which the first user plane network element is located and the identification information of the satellite on which the access network device is located, and the bearer network control plane network element determines the first path information based on the topology information of the satellite network, the identification information of the satellite on which the first user plane network element is located, the identification information of the satellite on which the access network device is located, the identification information of the gateway, and the characteristic information of the data flow. The bearer network control plane network element determines the first label based on the QoS requirement information. The bearer network control plane network element sends the first path information and the first label to the application function network element, and sends the first path information and the first label to the session management network element. The session management network element sends the first path information and the first label to the access network device and the first user plane network element.

In an example, there is a mapping relationship between QoS requirement information and a first label. The bearer network control plane network element may store the mapping relationship in advance, and the bearer network control plane network element may determine a corresponding first label based on the QoS requirement information and a mapping relationship between QoS requirement information and a third label.

In another example, there is a mapping relationship between QoS requirement information and characteristic information of a data flow, and there is a mapping relationship between characteristic information of a data flow and a first label. FIG. 10 is a diagram of a mapping relationship between a QoS requirement and a 5QI when the characteristic information of the data flow is a 5QI. The bearer network control plane network element may store the mapping relationship in advance. The bearer network control plane network element may determine characteristic information of a corresponding data flow based on the QoS requirement information and the mapping relationship between QoS requirement information and characteristic information of a data flow, and further determine a corresponding first label based on the characteristic information of the data flow and the mapping relationship between characteristic information of a data flow and a first label. When the characteristic information of the data flow is a 5QI, the mapping relationship between a 5QI and a first label is shown in FIG. 9.

In a second possible implementation, the transmission path of the data flow includes two parts. The first part is a transmission path between the access network device and the first user plane network element, and is denoted as a second path or an N3 interface segment transmission path. The second part is a transmission path between the first user plane network element and the gateway, and is denoted as a third path or an N6 interface segment transmission path. A label that corresponds to the second path and that is used to ensure QoS of the data flow is denoted as a second label, an N3 segment label, or an N3 segment QoS label. A label that corresponds to the third path and that is used to ensure QoS of the data flow is denoted as a third label, an N6 segment label, or an N6 segment QoS label.

It should be noted that the N6 interface segment transmission path herein is not the entire N6 interface segment transmission path, but is a part of the N6 interface segment transmission path, that is, the transmission path between the first user plane network element and the gateway, or is described as a partial transmission path that is in the N6 interface segment transmission path and that is located in the satellite network.

For example, after determining the first user plane network element, the session management network element further needs to determine second path information and the second label, and send the second path information and the second label to the access network device and the first user plane network element. The second path information indicates a transmission path of the data flow between the access network device and the first user plane network element, and the second label is used to determine a link between any two adjacent satellite nodes on the transmission path indicated by the second path information.

The second path information includes second identification information, and the second identification information indicates the transmission path indicated by the second path information (that is, the second identification information is identification information of the transmission path indicated by the second path information), and/or identification information of a satellite node that the data flow passes through on the transmission path indicated by the second path information.

For example, the session management network element determines the second path information based on the topology information of the satellite network, the identification information of the satellite on which the access network device is located, the identification information of the satellite on which the first user plane network element is located, and the characteristic information of the data flow. The session management network element determines the second label based on the characteristic information of the data flow. There is a mapping relationship between characteristic information of a data flow and a second label, and the session management network element may store the mapping relationship in advance. For example, the session management network element may determine a corresponding second label based on the obtained characteristic information of the data flow and the mapping relationship between characteristic information of a data flow and a second label. For example, the characteristic information of the data flow includes a resource type of the data flow and/or a priority of the data flow. The resource type includes, for example, a video stream and an audio stream, and the priority may be represented by using a 5G QoS identifier (5G QoS identifier, 5QI).

In addition, the session management network element sends, to the bearer network control plane network element, the identification information of the satellite on which the first user plane network element is located, the bearer network control plane network element determines third path information based on the topology information of the satellite network, the identification information of the satellite on which the first user plane network element is located, the identification information of the gateway, and QoS requirement information, and the bearer network control plane network element determines a third label based on the QoS requirement information, where the third path information indicates a transmission path of the data flow between the first user plane network element and the gateway, and the third label is used to determine a link between any two adjacent satellite nodes on the transmission path indicated by the third path information. The bearer network control plane network element sends the third path information and the third label to the session management network element and the application function network element. The session management network element sends the third path information and the third label to the user plane network element.

There is a mapping relationship between QoS requirement information and a third label. The bearer network control plane network element may store the mapping relationship in advance, and the bearer network control plane network element may determine a corresponding third label based on the QoS requirement information and a mapping relationship between QoS requirement information and a third label. Alternatively, there is a mapping relationship between QoS requirement information and characteristic information of a data flow, and there is a mapping relationship between characteristic information of a data flow and a third label. FIG. 10 is a diagram of a mapping relationship between a QoS requirement and a 5QI when the characteristic information of the data flow is a 5QI. The bearer network control plane network element may store the mapping relationship in advance. The bearer network control plane network element may determine characteristic information of a corresponding data flow based on the QoS requirement information and the mapping relationship between QoS requirement information and characteristic information of a data flow, and further determine a corresponding third label based on the characteristic information of the data flow and the mapping relationship between characteristic information of a data flow and a third label. The mapping relationship between characteristic information of a data flow and a third label is similar to that in FIG. 9, and details are not described herein again.

The third path information includes third identification information, and the third identification information indicates the transmission path indicated by the third path information (that is, the third identification information is identification information of the transmission path indicated by the third path information), and/or identification information of a satellite node that the data flow passes through on the transmission path indicated by the third path information.

In addition, it may be understood that, when the topology information is updated, the session management network element may obtain updated topology information, and determine a second user plane network element based on the updated topology information, the identification information of the satellite on which the at least one user plane network element is located, and the identification information of the satellite on which the access network device is located, where the second user plane network element is one of the at least one user plane network element. It should be noted that, for a method for determining the second user plane network element by the session management network element, refer to a specific method for determining the first user plane network element by the session management network element. Details are not described herein again. The second user plane network element may be different from the first user plane network element, or the second user plane network element is the same as the first user plane network element.

Further, when the second user plane network element is different from the first user plane network element, the session management network element needs to re-determine the transmission path of the data flow based on identification information of a satellite on which the second user plane network element is located. To be specific, in the foregoing content, the identification information of the satellite on which the first user plane network element is located that is applied when the transmission path is determined is replaced with the identification information of the satellite on which the second user plane network element is located, the topology information is replaced with the updated topology information, and other content does not change. Therefore, details are not described again.

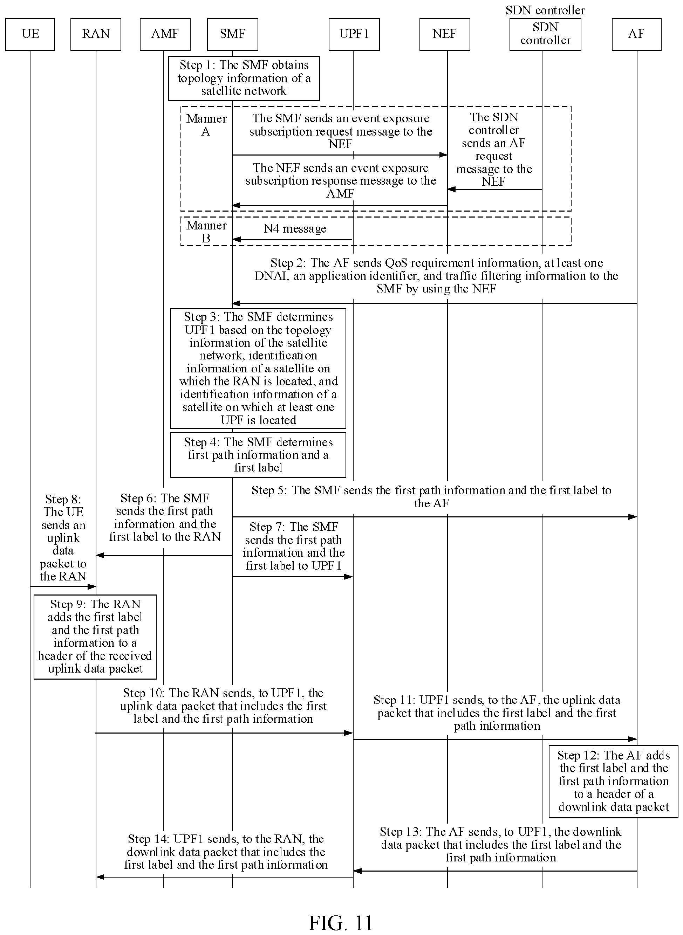

The following describes the first possible implementation with reference to an embodiment shown in FIG. 11.

It may be understood that the following procedure is performed after an AMF determines an SMF, and authorization and authentication of a PDU session are completed. For details, refer to steps 1 to 6 in a PDU session establishment step in Clause 4.3.2.2.1 in TS 23.502. In addition, in a UE registration procedure, UE may carry an optional information element to indicate that the UE is to communicate with a satellite network, and the SMF determines, based on a locally configured policy or a policy of the AMF, to obtain topology information of the satellite network.

An SDN controller may be an independent AF, or a functional module in OAM.

Step 1: The SMF obtains the topology information of the satellite network.

The SMF may obtain the topology information of the satellite network in but is not limited to the following manners:
Manner A: The SMF sends an event exposure subscription request message to an NEF. The NEF sends an event exposure subscription response message to the AMF, where the event exposure subscription response message carries the topology information of the satellite network. The topology information of the satellite network is sent by the SDN controller to the NEF. For example, the SDN controller sends an AF request message to the NEF, where the AF request message includes the topology information of the satellite network.

Alternatively, when the topology information of the satellite network changes, the SDN controller sends updated topology information of the satellite network to the NEF. The NEF sends the updated topology information of the satellite network to the SMF. In other words, the NEF may directly send the updated topology information of the satellite network to the SMF without waiting for a periodicity for feeding back the topology information of the satellite network to the SMF. This case is not shown in FIG. 11.

Manner B: A satellite on which UPF1 is located may obtain the topology information of the satellite network in a BGP-LS manner, and send the topology information to UPF1 through an internal interface. UPF1 sends an N4 message to the SMF, where the N4 message includes the topology information of the satellite network.

Method C: A satellite on which a RAN is located may obtain the topology information of the satellite network in a BGP-LS manner, and send the topology information to the RAN through an internal interface. The RAN sends the topology information to the SMF by using the AMF. This case is not shown in FIG. 11.

Step 2: The AF sends QoS requirement (QoS requirement) information of a data flow, at least one DNAI, an application identifier (application identifier), and traffic filtering information (traffic filtering information) to the SMF by using the NEF.

The at least one DNAI is used to select an appropriate UPF. The at least one DNAI may also be referred to as an optional DNAI. In addition, the SMF may alternatively locally store at least one DNAI.

Step 3: The SMF determines UPF1 based on the topology information of the satellite network, identification information of the satellite on which the RAN is located, and identification information of a satellite on which at least one UPF is located.

For details of step 3, refer to the related descriptions of step 710.

Step 4: The SMF determines first path information and a first label.

For example, the SMF determines the first path information based on the topology information of the satellite network, the identification information of the satellite on which the RAN is located, identification information of the satellite on which UPF1 is located, identification information of a gateway, and characteristic information of the data flow (for example, a 5QI of the data flow). The first path information indicates a transmission path of the data flow between the RAN and the gateway. The SMF determines the first label based on the 5QI of the data flow. The first label is used to determine a link between any two adjacent satellite nodes on the transmission path indicated by the first path information. The SMF may determine the 5QI of the data flow by using a mapping relationship between QoS requirement information and a 5QI and the QoS requirement information of the data flow that is obtained from the AF.

For example, the SMF may determine the first path information by using a preset algorithm (for example, a dijkstra algorithm) based on the characteristic information of the data flow and a delay of a channel that is between satellites in the satellite network and that is indicated by the topology information of the satellite network. It should be noted that a specific algorithm used by the SMF to determine the first path information is not limited in this application.

The transmission path of the data flow between the RAN and the gateway is denoted as a first path. The first path information may include identification information of the first path, for example, a path ID. Alternatively, the first path information includes complete path information, that is, includes identification information of a satellite node that the data flow passes through on the first path. For example, if the first path includes five satellite nodes, the first path information includes identification information of the five nodes.

For example, when the first path information includes only the identification information of the first path, the SMF may send, to the SDN controller by using the NEF, a correspondence between the identification information of the first path and the identification information of the satellite node that the data flow passes through on the first path. The SDN controller stores the correspondence. For example, the SMF sends session management calculated information (SM_Calculated_Information) to the SDN controller by using the NEF, where the session management calculated information carries the correspondence between the identification information of the first path and the identification information of the satellite node that the data flow passes through on the first path.

Step 5: The SMF sends the first path information and the first label to the AF.

It may be understood that the SMF may send the first path information and the first label to the AF or an application server (application server, AS). The AF is used as an example for description below.

For example, the SMF sends an event exposure message (Nsmf_EventExposure_Message) to the AF by using the NEF. The event exposure message includes the first path information and the first label.

Optionally, the SMF may further send second indication information to the AF, where the second indication information indicates the AF to add the first label and the first path information to a header of a downlink data packet of the data flow.

Step 6: The SMF sends the first path information and the first label to the RAN.

For example, the SMF sends an N2 PDU session request (N2 PDU Session Request) message to the RAN by using the AMF, where the N2 PDU session request message includes the first path information and the first label.

Optionally, the SMF may further send first indication information to the RAN, where the first indication information indicates the RAN to add the first label and the first path information to a header of an uplink data packet of the data flow.

Step 7: The SMF sends the first path information and the first label to UPF1.

For example, the SMF sends an N4 session establishment request (N4 Session Establishment Request) message to UPF1, where the N4 session establishment request message carries the first path information and the first label. Alternatively, the SMF sends an N4 session modification request (N4 Session Modification Request) message to UPF1, where the N4 session establishment modification message carries the first path information and the first label.

Optionally, the SMF may further send third indication information to UPF1, where the third indication information indicates UPF1 to forward, to the AF, the uplink data packet of the data flow that is received from the RAN, and forward, to the RAN, the downlink data packet of the data flow that is received from the AF.

Optionally, the SMF may further send the application identifier and/or the traffic filtering information to UPF1.

It may be understood that a sequence of performing step 5 to step 7 is merely an example, and the sequence of performing step 5 to step 7 is not limited in this application.

Step 8: The UE sends the uplink data packet to the RAN.

Step 9: The RAN adds the first label and the first path information to the header of the received uplink data packet.

It may be understood that the RAN may receive a correspondence between a plurality of labels and corresponding path information. When the RAN determines, based on the uplink data packet sent by the UE, a 5QI of the data flow to which the uplink data packet belongs, determines the corresponding first label based on the 5QI of the data flow, and determines, based on the determined first label, the first path information corresponding to the first label, the RAN determines to add the first label and the first path information to the header of the received uplink data packet.

Optionally, the RAN may further add a timestamp (Timestamp) to the header of the uplink data packet.

It may be understood that the topology information of the satellite network may change, and therefore a same label may correspond to different paths at different moments. In other words, as the topology information of the satellite network changes, the SMF may reselect a UPF, and consequently a transmission path of the data flow changes. Alternatively, UPF1 remains unchanged, and because the topology information of the satellite network changes, the transmission path of the data flow may also change. Therefore, the first path information corresponding to the first label also needs to be updated. The RAN adds the timestamp to the header of the uplink data packet, so that a satellite that receives the uplink data packet can determine, based on the timestamp, whether to select a latest path for forwarding.

For example, when a sending queue of a satellite includes a plurality of data packets, the satellite may perform routing based on path information carried in header information of a data packet with a latest timestamp. It is assumed that two data packets whose first labels are both 1 are queued in a buffer, a timestamp of one data packet is 18:00, a timestamp of the other data packet is 18:05, and path information in a header of the data packet whose timestamp is 18:05 is different from path information in a header of the data packet whose timestamp is 18:00 because the topology information is updated. In this case, the satellite may forward the two data packets based on the path information in the header of the data packet whose timestamp is 18:05.

Step 10: The RAN sends, to UPF1, the uplink data packet that includes the first label and the first path information.

Step 11: UPF1 sends, to the AF, the uplink data packet that includes the first label and the first path information.

In a possible design, UPF1 directly forwards the received uplink data packet to the AF. In other words, UPF1 does not discard the header of the received uplink data packet.

In another possible design, the UPF discards the header of the received uplink data packet, and re-adds the first label and the first path information to the header of the uplink data packet.

For example, the UPF may receive a plurality of labels and path information corresponding to the plurality of labels, identify, based on an application identifier and traffic filtering information, an application to which traffic of the uplink data packet belongs, obtain corresponding QoS requirement information, determine, based on a correspondence between a 5QI and QoS requirement information, a 5QI corresponding to the QoS requirement information, determine, based on the 5QI and a mapping relationship between a 5QI and a first label, a first label corresponding to the 5QI, and determining, based on the first label, first path information corresponding to the first label.

For example, after receiving the uplink data packet from the RAN, UPF1 identifies, based on an application identifier and traffic filtering information, an application to which traffic of the uplink data packet belongs, obtains corresponding QoS requirement information, determines, based on a correspondence between a first label and QoS requirement information, a first label corresponding to the QoS requirement information, and determines, based on the first label, first path information corresponding to the first label.

Step 12: The AF adds the first label and the first path information to the header of the downlink data packet.

Optionally, the AF may further add a timestamp to the header of the downlink data packet.

For example, the AF may receive a plurality of labels and path information corresponding to the plurality of labels; and the AF may determine a 5QI of the data flow by using a mapping relationship between QoS requirement information and a 5QI and QoS requirement information of the data flow, determine, based on the 5QI of the data flow and a correspondence between a 5QI and a first label, a first label corresponding to the 5QI of the data flow, and further determine first path information corresponding to the first label.

For example, the AF may receive a plurality of labels and path information corresponding to the plurality of labels; and the AF may determine, by using a mapping relationship between QoS requirement information and a first label and QoS requirement information of the data flow, a first label corresponding to the QoS requirement information of the data flow, and further determine first path information corresponding to the first label.

Step 13: The AF sends, to UPF1, the downlink data packet that includes the first label and the first path information.

Step 14: UPF1 sends, to the RAN, the downlink data packet that includes the first label and the first path information.

In a possible design, the UPF directly forwards the received downlink data packet to the RAN. In other words, the first UPF does not discard the header of the received downlink data packet.

The foregoing method can ensure QoS performance of data packet transmission on an inter-satellite link.

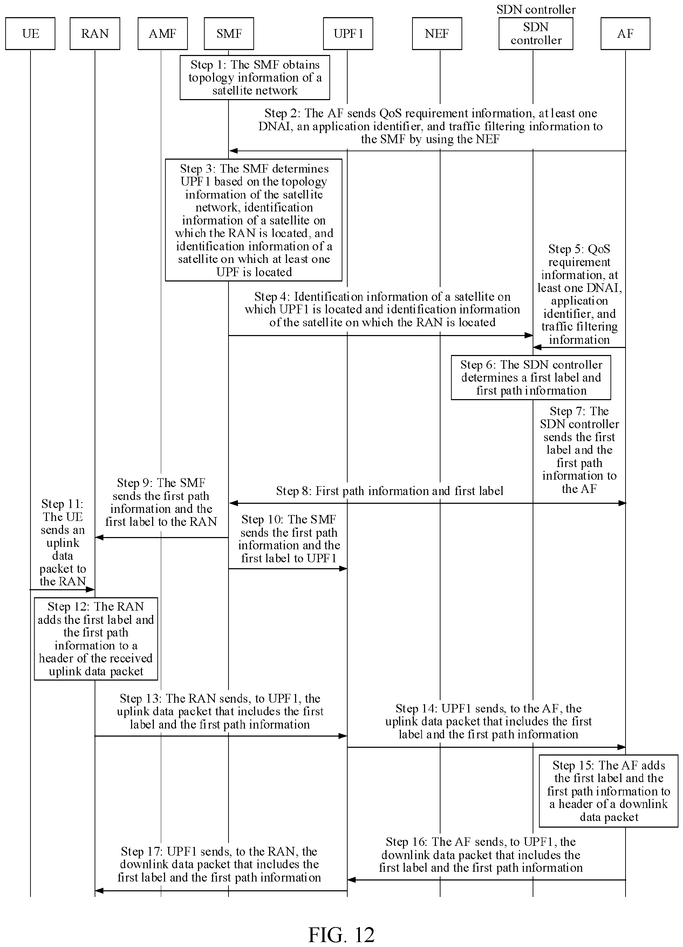

The following describes the variation of the first possible implementation with reference to an embodiment shown in FIG. 12.

For step 1 to step 3, refer to step 1 to step 3 in FIG. 11. Details are not described herein again.

Step 4: The SMF sends, to the SDN controller, identification information of a satellite on which UPF1 is located and identification information of a satellite on which a RAN is located.

Step 5: The AF sends the QoS requirement information of the data flow, the application identifier, and the traffic filtering information to the SDN controller.

Step 6: The SDN controller determines first path information and a first label.

For example, the SDN controller determines the first path information based on the topology information of the satellite network, the identification information of the satellite on which the RAN is located, the identification information of the satellite on which UPF1 is located, identification information of a gateway, and a 5QI of the data flow. The first path information indicates a transmission path, between the RAN and the gateway, of the data flow corresponding to the QoS requirement information.

For example, the SDN controller may determine the 5QI of the data flow by using a mapping relationship between QoS requirement information and a 5QI and the QoS requirement information of the data flow that is received from the AF. The SDN controller may determine the first label based on the 5QI of the data flow. The first label is used to determine a link between any two adjacent satellite nodes on the transmission path indicated by the first path information.

Step 7: The SDN controller sends the first path information and the first label to the AF.

Optionally, the SDN controller may send second indication information to the AF, where the second indication information indicates the AF to add the first label and the first path information to a header of a downlink data packet of the data flow.

Step 8: The SDN controller sends the first path information and the first label to the SMF.

For step 9 to step 17, refer to step 6 to step 13 in the embodiment shown in FIG. 11.

The foregoing method can ensure QoS performance of data packet transmission on an inter-satellite link.

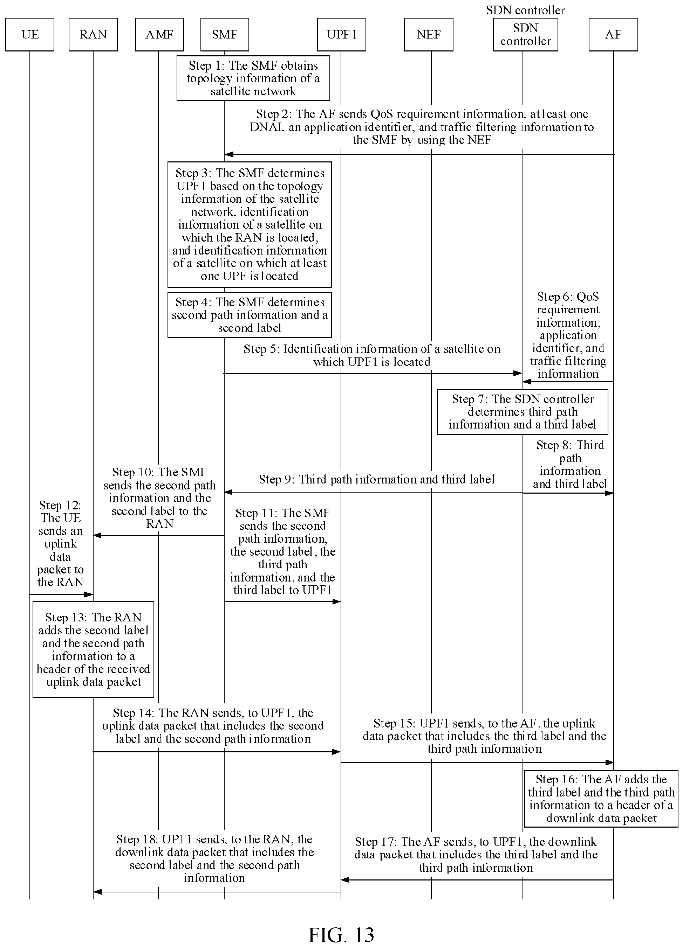

The following describes the second possible implementation with reference to an embodiment shown in FIG. 13.

For step 1 to step 3, refer to step 1 to step 3 in FIG. 11. Details are not described herein again.

Step 4: The SMF determines second path information based on a 5QI of the data flow, the topology information of the satellite network, the identification information of the satellite on which the RAN is located, and identification information of a satellite on which UPF1 is located, and determines a second label based on the 5QI of the data flow, where the second path information indicates a transmission path of the data flow between RAN1 and UPF1, and the second label is used to determine a link between any two adjacent satellite nodes on the transmission path indicated by the second path information.

For example, the SMF may determine the second path information and the second label by using a preset algorithm (a dijkstra algorithm) based on a delay of a channel that is between satellites in the satellite network and that is indicated by the topology information of the satellite network. It should be noted that a specific algorithm used by the SMF to determine the second path information and the second label is not limited in this application.

A transmission path of the data flow between the RAN and UPF1 is denoted as a second path. The second path information may include identification information of the second path, for example, a path ID. Alternatively, the second path information includes complete path information, that is, includes identification information of a satellite node that the data flow passes through on the second path. For example, if the second path includes four satellite nodes, the second path information includes identification information of the four satellite nodes.

Step 5: The SMF sends, to the SDN controller, the identification information of the satellite on which UPF1 is located.

For example, the SMF may send calculated information (SMF_Calculated_Information) to the SDN controller, where the calculated information includes the identification information of the satellite on which UPF1 is located.

Step 6: The AF sends the QoS requirement information of the data flow, the application identifier, and the traffic filtering information to the SDN controller.

For example, the AF sends an AF request message to the SDN controller, where the AF request message includes the QoS requirement information of the data flow, the application identifier, and the traffic filtering information.

Step 7: The SDN controller determines third path information and a third label.

For example, the SDN controller determines the third path information based on the topology information of the satellite network, the identification information of the satellite on which UPF1 is located, identification information of a gateway, and the 5QI of the data flow, where the third path information indicates a transmission path, between UPF1 and the gateway, of the data flow corresponding to the QoS requirement information.

The SDN controller may determine the 5QI of the data flow by using a mapping relationship between QoS requirement information and a 5QI and the QoS requirement information of the data flow that is received from the AF. The SDN controller may determine the third label based on the 5QI of the data flow. The third label is used to determine a link between any two adjacent satellite nodes on the transmission path indicated by the third path information.

Step 8: The SDN controller sends the third path information and the third label to the AF.

Optionally, the SDN controller may send sixth indication information to the AF, where the sixth indication information indicates the AF to add the third label and the third path information to a header of a downlink data packet of the data flow.

Step 9: The SDN controller sends the third path information and the third label to the SMF.

For example, the SDN controller sends an event exposure subscription response message to the SMF by using the NEF, where the message includes the third path information and the third label. In addition, the message may further include an application identifier and traffic filtering information.

Step 10: The SMF sends the second path information and the second label to the RAN.

For example, the SMF sends an N2 PDU session request message to the RAN by using the AMF, where the N2 PDU session request message includes the second path information and the second label.

Optionally, the SMF may further send fourth indication information to the RAN, where the fourth indication information indicates the RAN to add the second label and the second path information to a header of an uplink data packet of the data flow.

Step 11: The SMF sends the second path information, the second label, the third path information, and the third label to UPF1.

For example, the SMF sends an N4 session establishment request message to UPF1, where the N4 session establishment request message carries the second path information, the second label, the third path information, and the third label. Alternatively, the SMF sends an N4 session modification request message to UPF1, where the N4 session establishment modification message carries the second path information, the second label, the third path information, and the third label.

Optionally, the SMF may further send fifth indication information to UPF1, where the fifth indication information indicates UPF1 to add the third label and the third path information to the header of the uplink data packet of the data flow that is received from the RAN and forward the uplink data packet to the AF, and add the second label and the second path information to the header of the downlink data packet of the data flow that is received from the AF and forward the downlink data packet to the RAN.

Optionally, the SMF sends the application identifier and the traffic filtering information to UPF1.

Step 12: The UE sends the uplink data packet to the RAN.

Step 13: The RAN adds the second label and the second path information to the header of the received uplink data packet.

It may be understood that the RAN may receive a correspondence between a plurality of labels and path information. The RAN may determine, based on the uplink data packet sent by the UE, a 5QI of the data flow to which the uplink data packet belongs, determine the corresponding second label based on the 5QI of the data flow, and determine, based on the second label, the second path information corresponding to the second label; and the RAN determines to add the second label and the second path information to the header of the received uplink data packet.

Optionally, the RAN may further add a timestamp to the header of the uplink data packet.

Step 14: The RAN sends, to UPF1, the uplink data packet that includes the second label and the second path information.

Step 15: UPF1 sends, to the AF, the uplink data packet that includes the third label and the third path information.

In a possible design, the UPF discards the header of the received uplink data packet, and re-adds the third label and the third path information to the header of the uplink data packet.

For example, after receiving the uplink data packet from the RAN, UPF1 determines, based on the second label and a mapping relationship between a second label and a third label, the third label corresponding to the second label and the third path information corresponding to the third label.

For example, after receiving the uplink data packet from the RAN, UPF1 identifies, based on an application identifier and traffic filtering information, an application to which traffic of the uplink data packet belongs, obtains corresponding QoS requirement information, determines, based on a correspondence between a 5QI and QoS requirement information, a 5QI corresponding to the QoS requirement information, determines, based on the 5QI and a mapping relationship between a 5QI and a third label, a third label corresponding to the 5QI, and determines, based on the third label, third path information corresponding to the third label.

For example, after receiving the uplink data packet from the RAN, UPF1 identifies, based on an application identifier and traffic filtering information, an application to which traffic of the uplink data packet belongs, obtains corresponding QoS requirement information, determines, based on a correspondence between a third label and QoS requirement information, a third label corresponding to the QoS requirement information, and determines, based on the third label, third path information corresponding to the third label.

Step 16: The AF adds the third label and the third path information to the header of the downlink data packet.

Optionally, the AF may further add a timestamp to the header of the downlink data packet.

For example, the AF may receive a plurality of labels and path information corresponding to the plurality of labels; and the AF may determine a 5QI of the data flow by using a mapping relationship between QoS requirement information and a 5QI and QoS requirement information of the data flow, determine a third label based on the 5QI of the data flow, and further determine third path information corresponding to the third label.

For example, the AF may receive a plurality of labels and path information corresponding to the plurality of labels; and the AF may determine a third label by using a mapping relationship between QoS requirement information and a third label and QoS requirement information of the data flow, and further determine third path information corresponding to the third label.

Step 17: The AF sends, to UPF1, the downlink data packet that includes the third label and the third path information.

Step 18: UPF1 sends, to the RAN, the downlink data packet that includes the second label and the second path information.

In a possible design, UPF1 discards the header of the received downlink data packet, and re-adds the second label and the second path information to the downlink data packet.

The foregoing method can ensure QoS performance of data packet transmission on an inter-satellite link.

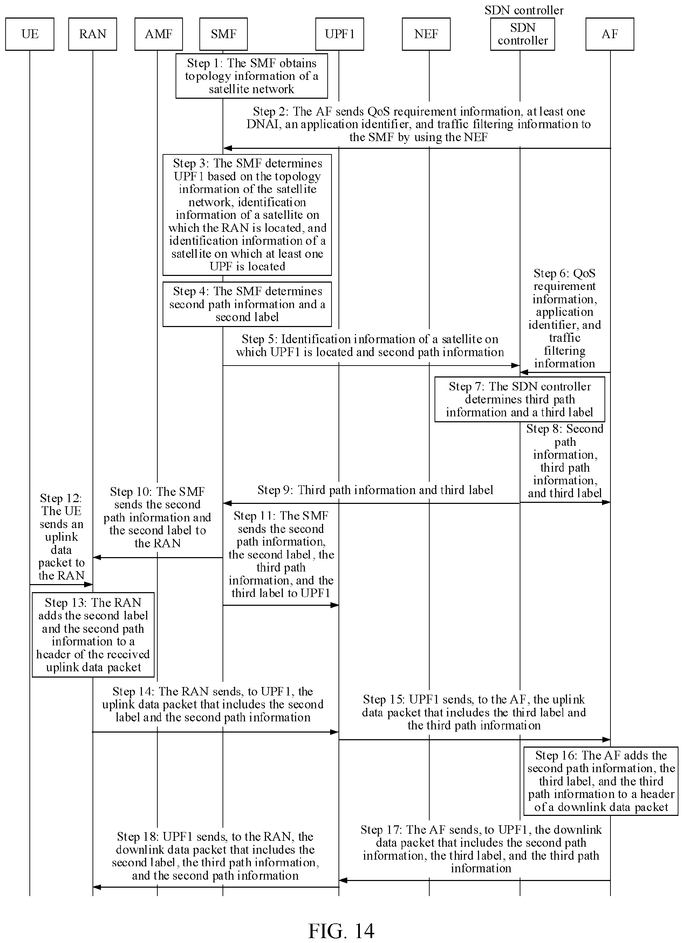

The following describes the variation of the second possible implementation with reference to an embodiment shown in FIG. 14.

For step 1 to step 4, refer to step 1 to step 4 in FIG. 13. Details are not described herein again.

Step 5: The SMF sends, to the SDN controller, identification information of a satellite on which UPF1 is located and second path information.

For step 6 and step 7, refer to step 6 and step 7 in FIG. 11.

Step 8: The SDN controller sends the second path information, third path information, and a third label to the AF.

Optionally, the SDN controller may send sixth indication information to the AF, where the sixth indication information indicates the AF to add the third label, the third path information, and the second path information to a header of a downlink data packet of the data flow.

For step 9 to step 15, refer to step 9 to step 15 in FIG. 13.

Step 16: The AF adds the third label, the third path information, and the second path information to the header of the downlink data packet.

Optionally, the AF may further add a timestamp to the header of the downlink data packet.

For example, the AF may receive a plurality of labels and path information corresponding to the plurality of labels; and the AF may determine a 5QI of the data flow by using a mapping relationship between QoS requirement information and a 5QI and QoS requirement information of the data flow, determine a third label based on the 5QI of the data flow, and further determine third path information corresponding to the third label and second path information.

For example, the AF may receive a plurality of labels and path information corresponding to the plurality of labels; and the AF may determine a third label by using a mapping relationship between QoS requirement information and a third label and QoS requirement information of the data flow, and further determine third path information corresponding to the third label and second path information.

Step 17: The AF sends, to UPF1, the downlink data packet that includes the third label, the third path information, and the second path information.

Step 18: UPF1 sends, to the RAN, the downlink data packet that includes the second label and the second path information.

In a possible design, UPF1 discards the header of the received downlink data packet, and re-adds the second label and the second path information to the downlink data packet.

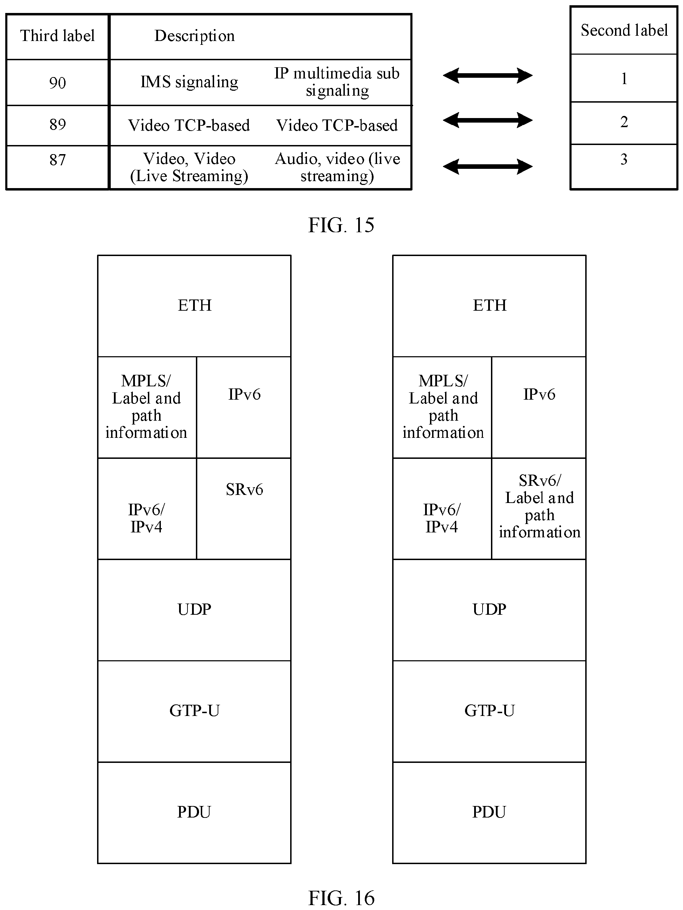

In a possible design, UPF1 determines the second label based on the second path information. If the second label is the same as the third label, UPF1 directly sends the received data packet to the RAN. In this case, the header of the downlink data packet includes the third label, the third path information, and the second path information. If the second label is different from the third label, UPF1 replaces the third label with the second label. FIG. 15 is a diagram of a mapping relationship between a second label and a third label. In this case, the header of the downlink data packet includes the second label, the third path information, and the second path information.

The foregoing method can ensure QoS performance of data packet transmission on an inter-satellite link.

It should be noted that a label and path information may be added to a header of a data packet in but is not limited to the following two implementations, as shown in FIG. 16:
Manner 1: Store the label and the path information in a layer 3 header.
Manner 2: Store the label and the path information in a layer 2 header.

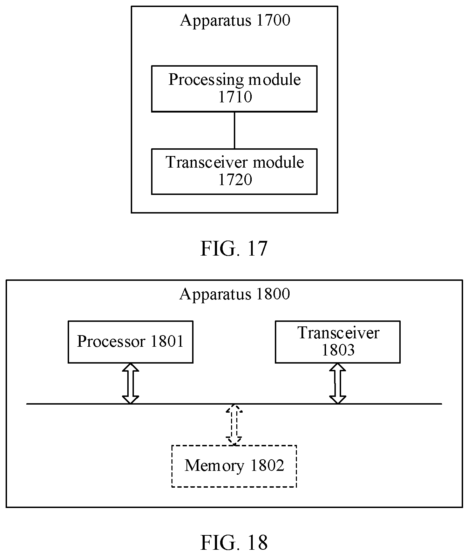

FIG. 17 is a possible example block diagram of a communication apparatus according to an embodiment of this application. The apparatus 1700 includes a transceiver module 1720 and a processing module 1710. The transceiver module 1720 may include a receiving unit and a sending unit. The processing module 1710 is configured to control and manage an action of the apparatus 1700. The transceiver module 1720 is configured to support the apparatus 1700 in communicating with another network entity. Optionally, the apparatus 1700 may further include a storage unit. The storage unit is configured to store program code and data of the apparatus 1700.

Optionally, the modules in the apparatus 1700 may be implemented by software.

Optionally, the processing module 1710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in embodiments of this application. Alternatively, the processor may be a combination of processors implementing a computing function, for example, a combination of one or more microprocessors, or a combination of a DSP and a microprocessor. The transceiver module 1720 may be a communication interface, a transceiver, a transceiver circuit, or the like. The communication interface is a general term. During specific implementation, the communication interface may include a plurality of interfaces. The storage unit may be a memory.

When the apparatus 1700 is a session management network element or a chip in the session management network element, the processing module 1710 in the apparatus 1700 may support the apparatus 1700 in performing the actions of the session management network element in the foregoing method example, for example, may support the apparatus 1700 in performing step 700 or step 710 in FIG. 7.

The transceiver module 1720 may support the apparatus 1700 in communicating with a terminal device.

For example, the processing module 1710 invokes the transceiver module 1720 to perform the following steps: obtaining topology information of a satellite network, where the topology information includes information about a channel between satellites in the satellite network; and determining a first user plane network element based on the topology information, identification information of a satellite on which at least one user plane network element is located, and identification information of a satellite on which an access network device is located, where the first user plane network element is one of the at least one user plane network element.

In a possible design, the transceiver module 1720 is configured to: when obtaining the topology information of the satellite network, send a subscription message to a network exposure network element, where the subscription message is used to subscribe to the topology information; and receive the topology information from the network exposure network element.

In a possible design, the transceiver module 1720 is configured to: when obtaining the topology information of the satellite network, obtain the topology information from the first user plane network element.

In a possible design, the transceiver module 1720 is configured to: when obtaining the topology information of the satellite network, obtain the topology information from a bearer network control plane network element.

In a possible design, the processing module 1710 is configured to: obtain updated topology information of the satellite network; and determine a second user plane network element based on the updated topology information of the satellite network, the identification information of the satellite on which the at least one user plane network element is located, and the identification information of the satellite on which the access network device is located, where the second user plane network element is one of the at least one user plane network element, and the second user plane network element is different from the first user plane network element.

In a possible design, the processing module 1710 is configured to: when determining the first user plane network element based on the topology information, the identification information of the satellite on which the at least one user plane network element is located, and the identification information of the satellite on which the access network device is located, determine the first user plane network element based on the topology information, the identification information of the satellite on which the at least one user plane network element is located, the identification information of the satellite on which the access network device is located, and first information, where the first information includes at least one of location information of the at least one user plane network element, location information of the access network device, location information of a gateway, identification information of the gateway, and a data network access identifier.

In a possible design, the processing module 1710 is configured to: after determining the first user plane network element, determine first path information based on the topology information, the identification information of the satellite on which the access network device is located, identification information of a satellite on which the first user plane network element is located, the identification information of the gateway, and characteristic information of a data flow; and determine a first label based on the characteristic information of the data flow, where the first path information indicates a transmission path of the data flow between the access network device and the gateway, and the first label is used to determine a link between any two adjacent satellite nodes on the transmission path indicated by the first path information.

In a possible design, the first path information includes first identification information, and the first identification information indicates the transmission path indicated by the first path information, and/or identification information of a satellite node that the data flow passes through on the transmission path indicated by the first path information.

In a possible design, the transceiver module 1720 is configured to send the first path information and the first label to the access network device.

In a possible design, the transceiver module 1720 is configured to send first indication information to the access network device, where the first indication information indicates the access network device to add the first label and the first path information to a header of an uplink data packet of the data flow.

In a possible design, the transceiver module 1720 is configured to send the first path information and the first label to an application function network element.

In a possible design, the transceiver module 1720 is configured to send second indication information to the application function network element, where the second indication information indicates the application function network element to add the first label and the first path information to a header of a downlink data packet of the data flow.

In a possible design, the transceiver module 1720 is configured to send the first path information and the first label to the first user plane network element.

In a possible design, the transceiver module 1720 is configured to send third indication information to the first user plane network element, where the third indication information indicates the first user plane network element to forward the uplink data packet of the data flow received from the access network device to the application function network element, and forward the downlink data packet of the data flow received from the application function network element to the access network device.

In a possible design, the processing module 1710 is configured to: after determining the first user plane network element, determine second path information based on the topology information, the identification information of the satellite on which the access network device is located, identification information of a satellite on which the first user plane network element is located, and characteristic information of a data flow; and determine a second label based on the characteristic information of the data flow, where the second path information indicates a transmission path of the data flow between the access network device and the first user plane network element, and the second label is used to determine a link between any two adjacent satellite nodes on the transmission path indicated by the second path information.

In a possible design, the second path information includes second identification information, and the second identification information indicates the transmission path indicated by the second path information, and/or identification information of a satellite node that the data flow passes through on the transmission path indicated by the second path information.

In a possible design, the transceiver module 1720 is configured to: send, to the bearer network control plane network element, the identification information of the satellite on which the first user plane network element is located; and receive third path information and a third label from the bearer network control plane network element, where the third path information indicates a transmission path of the data flow between the first user plane network element and the gateway, and the third label is used to determine a link between any two adjacent satellite nodes on the transmission path indicated by the third path information.

In a possible design, the third path information includes third identification information, and the third identification information indicates the transmission path indicated by the second path information, and/or identification information of a satellite node that the data flow passes through on the transmission path indicated by the third path information.

In a possible design, the transceiver module 1720 is configured to send the second path information and the second label to the access network device.

In a possible design, the transceiver module 1720 is configured to send fourth indication information to the access network device, where the fourth indication information indicates the access network device to add the second label and the second path information to a header of an uplink data packet of the data flow.

In a possible design, the transceiver module 1720 is configured to send the second path information, the second label, the third path information, and the third label to the first user plane network element.

In a possible design, the transceiver module 1720 is configured to send fifth indication information to the first user plane network element, where the fifth indication information indicates the first user plane network element to add the third label and the third path information to the header of the uplink data packet of the data flow received from the access network device and forward the uplink data packet of the data flow to an application function network element, and add the second label and the second path information to a header of a downlink data packet of the data flow received from the application function network element and forward the downlink data packet of the data flow to the access network device.

In a possible design, the channel information includes one or more of the following: identification information of the satellites in the satellite network, identification information of the channel between the satellites in the satellite network, a delay of the channel between the satellites in the satellite network, a bandwidth of the channel between the satellites in the satellite network, and overheads of the channel between the satellites in the satellite network.

It should be understood that the apparatus 1700 in this embodiment of this application may correspond to the session management network element in the foregoing method embodiment, and operations and/or functions of the modules in the apparatus 1700 are used to implement corresponding steps of the method performed by the session management network element in the foregoing method embodiment. Therefore, beneficial effects in the foregoing method embodiment may also be implemented. For brevity, details are not described herein again.

When the apparatus 1700 is a bearer network control plane network element or a chip in the bearer network control plane network element, the processing module 1710 in the apparatus 1700 may support the apparatus 1700 in performing the actions of the bearer network control plane network element in the foregoing method example.

The transceiver module 1720 may support the apparatus 1700 in communicating with the session management network element.

For example, the transceiver module 1720 is configured to receive identification information of a satellite on which a first user plane network element is located.

The processing module 1710 is configured to: determine third path information based on QoS requirement information, topology information of a satellite network, the identification information of the satellite on which the first user plane network element is located, and identification information of a gateway, and determine a third label based on the QoS requirement information, where the topology information includes information about a channel between satellites in the satellite network, the third path information indicates a transmission path, between the first user plane network element and the gateway, of a data flow corresponding to the QoS requirement information, and the third label is used to determine a link between any two adjacent satellite nodes on the path indicated by the third path information.

The transceiver module 1720 is configured to send the third path information and the third label.

In a possible design, the transceiver module 1720 is configured to send the topology information to a network exposure network element.

In a possible design, the transceiver module 1720 is configured to receive the QoS requirement information from an application function network element.

In a possible design, the transceiver module 1720 is configured to send the third path information and the third label to the application function network element.

In a possible design, the transceiver module 1720 is configured to send sixth indication information to the application function network element, where the sixth indication information indicates the application function network element to add the third label and the third path information to a header of a downlink data packet of the data flow corresponding to the QoS requirement information.

It should be understood that the apparatus 1700 in this embodiment of this application may correspond to the bearer network control plane network element in the foregoing method embodiment, and operations and/or functions of the modules in the apparatus 1700 are used to implement corresponding steps of the method performed by the bearer network control plane network element in the foregoing method embodiment. Therefore, beneficial effects in the foregoing method embodiment may also be implemented. For brevity, details are not described herein again.

FIG. 18 is a diagram of a structure of a communication apparatus 1800 according to an embodiment of this application. As shown in FIG. 18, the apparatus 1800 includes a processor 1801.

When the apparatus 1800 is a session management network element or a chip in the session management network element, in a possible implementation, the processor 1801 is configured to invoke an interface to perform the following actions:
obtaining topology information of a satellite network, where the topology information includes information about a channel between satellites in the satellite network; and determining a first user plane network element based on the topology information, identification information of a satellite on which at least one user plane network element is located, and identification information of a satellite on which an access network device is located, where the first user plane network element is one of the at least one user plane network element.

It should be understood that the apparatus 1800 may be further configured to perform other steps and/or operations on a session management network element side in the foregoing embodiment. For brevity, details are not described herein again.

When the apparatus 1800 is a bearer network control plane network element or a chip in the bearer network control plane network element, in a possible implementation, the processor 1801 is configured to invoke an interface to perform the following actions: receiving identification information of a satellite on which a first user plane network element is located; determining third path information and a third label based on QoS requirement information, topology information of a satellite network, the identification information of the satellite on which the first user plane network element is located, and identification information of a gateway, where the topology information includes information about a channel between satellites in the satellite network, the third path information indicates a transmission path, between the first user plane network element and the gateway, of a data flow corresponding to the QoS requirement information, and the third label is used to determine a link between any two adjacent satellite nodes on the path indicated by the third path information; and sending the third path information and the third label.

It should be understood that the apparatus 1800 may be further configured to perform other steps and/or operations on a bearer network control plane network element side in the foregoing embodiment. For brevity, details are not described herein again.

It should be understood that the processor 1801 may invoke an interface to perform the foregoing sending and receiving actions, where the invoked interface may be a logical interface or a physical interface. This is not limited. Optionally, the physical interface may be implemented by a transceiver. Optionally, the apparatus 1800 may further include a transceiver 1803.

Optionally, the apparatus 1800 further includes a memory 1802. The memory 1802 may store program code in the foregoing method embodiment, so that the processor 1801 invokes the program code.

Specifically, if the apparatus 1800 includes the processor 1801, the memory 1802, and the transceiver 1803, the processor 1801, the memory 1802, and the transceiver 1803 communicate with each other through an internal connection path, to transmit a control signal and/or a data signal. In a possible design, the processor 1801, the memory 1802, and the transceiver 1803 may be implemented by using a chip. The processor 1801, the memory 1802, and the transceiver 1803 may be implemented in a same chip, or may be implemented in different chips, or any two functions are combined and implemented in one chip. The memory 1802 may store the program code. The processor 1801 invokes the program code stored in the memory 1802 to implement corresponding functions of the apparatus 1800.

The method disclosed in the foregoing embodiment of this application may be applied to the processor, or may be implemented by the processor. The processor may be an integrated circuit chip and has a signal processing capability. In an implementation process, steps of the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processing unit, CPU), or may be a network processor (network processor, NP), or may be a digital signal processing circuit (digital signal processor, DSP), or may be a micro control unit (micro control unit, MCU), or may be a programmable logic device (programmable logic device, PLD) or another integrated chip. The methods, the steps, and the logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

It should be understood that, in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers involved in the foregoing processes are merely distinguished for ease of description, and should not constitute any limitation on the implementation processes of embodiments of this application.

It should be further understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by using electronic hardware or a combination of computer software and electronic hardware. Whether these functions are performed by hardware or hardware driven by computer software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A communication method, wherein the method comprises:
obtaining topology information of a satellite network, wherein the topology information comprises information about a channel between satellites in the satellite network; and
determining a first user plane network element based on the topology information, identification information of a satellite on which at least one user plane network element is located, and identification information of a satellite on which an access network device is located, wherein the first user plane network element is one of the at least one user plane network element.

2. The method according to claim 1, wherein the obtaining topology information of a satellite network comprises:
sending a subscription message to a network exposure network element, wherein the subscription message is used to subscribe to the topology information; and
receiving the topology information from the network exposure network element.

3. The method according to claim 1, wherein the obtaining topology information of a satellite network comprises:
obtaining the topology information from the first user plane network element.

4. The method according to claim 1, wherein the obtaining topology information of a satellite network comprises:
obtaining the topology information from a bearer network control plane network element.

5. The method according to any one of claims 1 to 4, further comprising:
obtaining updated topology information of the satellite network; and
determining a second user plane network element based on the updated topology information of the satellite network, the identification information of the satellite on which the at least one user plane network element is located, and the identification information of the satellite on which the access network device is located, wherein the second user plane network element is one of the at least one user plane network element, and the second user plane network element is different from the first user plane network element.

6. The method according to any one of claims 1 to 5, wherein the determining a first user plane network element based on the topology information, identification information of a satellite on which at least one user plane network element is located, and identification information of a satellite on which an access network device is located comprises:
determining the first user plane network element based on the topology information, the identification information of the satellite on which the at least one user plane network element is located, the identification information of the satellite on which the access network device is located, and first information, wherein the first information comprises at least one of location information of the at least one user plane network element, location information of the access network device, location information of a gateway, identification information of the gateway, or a data network access identifier.

7. The method according to any one of claims 1 to 6, further comprising:
after determining the first user plane network element, determining first path information based on the topology information, the identification information of the satellite on which the access network device is located, identification information of a satellite on which the first user plane network element is located, the identification information of the gateway, and characteristic information of a data flow; and
determining a first label based on the characteristic information of the data flow, wherein
the first path information indicates a transmission path of the data flow between the access network device and the gateway, and the first label is used to determine a link between any two adjacent satellite nodes on the transmission path indicated by the first path information.

8. The method according to claim 7, wherein the first path information comprises first identification information, and the first identification information indicates the transmission path indicated by the first path information, and/or identification information of a satellite node that the data flow passes through on the transmission path indicated by the first path information.

9. The method according to claim 7 or 8, further comprising:
sending the first path information and the first label to the access network device.

10. The method according to claim 9, further comprising:
sending first indication information to the access network device, wherein the first indication information indicates the access network device to add the first label and the first path information to a header of an uplink data packet of the data flow.

11. The method according to any one of claims 7 to 10, further comprising:
sending the first path information and the first label to an application function network element.

12. The method according to claim 11, further comprising:
sending second indication information to the application function network element, wherein the second indication information indicates the application function network element to add the first label and the first path information to a header of a downlink data packet of the data flow.

13. The method according to any one of claims 7 to 12, further comprising:
sending the first path information and the first label to the first user plane network element.

14. The method according to claim 13, further comprising:
sending third indication information to the first user plane network element, wherein the third indication information indicates the first user plane network element to forward the uplink data packet of the data flow received from the access network device to the application function network element, and forward the downlink data packet of the data flow received from the application function network element to the access network device.

15. The method according to any one of claims 1 to 6, further comprising:
after determining the first user plane network element, determining second path information based on the topology information, the identification information of the satellite on which the access network device is located, identification information of a satellite on which the first user plane network element is located, and characteristic information of a data flow; and
determining a second label based on the characteristic information of the data flow, wherein
the second path information indicates a transmission path of the data flow between the access network device and the first user plane network element, and the second label is used to determine a link between any two adjacent satellite nodes on the transmission path indicated by the second path information.

16. The method according to claim 15, wherein the second path information comprises second identification information, and the second identification information indicates the transmission path indicated by the second path information, and/or identification information of a satellite node that the data flow passes through on the transmission path indicated by the second path information.

17. The method according to claim 15 or 16, further comprising:
sending, to the bearer network control plane network element, the identification information of the satellite on which the first user plane network element is located; and
receiving third path information and a third label from the bearer network control plane network element, wherein the third path information indicates a transmission path of the data flow between the first user plane network element and the gateway, and the third label is used to determine a link between any two adjacent satellite nodes on the transmission path indicated by the third path information.

18. The method according to claim 17, wherein the third path information comprises third identification information, and the third identification information indicates the transmission path indicated by the third path information, and/or identification information of a satellite node that the data flow passes through on the transmission path indicated by the third path information.

19. The method according to any one of claims 15 to 18, further comprising:
sending the second path information and the second label to the access network device.

20. The method according to claim 19, further comprising:
sending fourth indication information to the access network device, wherein the fourth indication information indicates the access network device to add the second label and the second path information to a header of an uplink data packet of the data flow.

21. The method according to any one of claims 17 to 20, further comprising:
sending the second path information, the second label, the third path information, and the third label to the first user plane network element.

22. The method according to claim 21, further comprising:
sending fifth indication information to the first user plane network element, wherein the fifth indication information indicates the first user plane network element to add the third label and the third path information to the header of the uplink data packet of the data flow received from the access network device and forward the uplink data packet of the data flow to an application function network element, and add the second label and the second path information to a header of a downlink data packet of the data flow received from the application function network element and forward the downlink data packet of the data flow to the access network device.

23. The method according to any one of claims 1 to 22, wherein the channel information comprises one or more of the following:
identification information of the satellites in the satellite network, identification information of the channel between the satellites in the satellite network, a delay of the channel between the satellites in the satellite network, a bandwidth of the channel between the satellites in the satellite network, and overheads of the channel between the satellites in the satellite network.

24. A communication method, wherein the method comprises:
receiving identification information of a satellite on which a first user plane network element is located;
determining third path information based on quality of service QoS requirement information, topology information of a satellite network, the identification information of the satellite on which the first user plane network element is located, and identification information of a gateway, and determining a third label based on the QoS requirement information, wherein the topology information comprises information about a channel between satellites in the satellite network, the third path information indicates a transmission path, between the first user plane network element and the gateway, of a data flow corresponding to the QoS requirement information, and the third label is used to determine a link between any two adjacent satellite nodes on the path indicated by the third path information; and
sending the third path information and the third label.

25. The method according to claim 24, further comprising:
sending the topology information to a network exposure network element.

26. The method according to claim 24 or 25, further comprising:
receiving the QoS requirement information from an application function network element.

27. The method according to any one of claims 24 to 26, wherein the sending the third path information and the third label comprises:
sending the third path information and the third label to the application function network element.

28. The method according to claim 27, further comprising:
sending sixth indication information to the application function network element, wherein the sixth indication information indicates the application function network element to add the third label and the third path information to a header of a downlink data packet of the data flow corresponding to the QoS requirement information.

29. A communication apparatus, comprising a processor and an interface circuit, wherein
the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 28 by using a logic circuit or executing code instructions.

30. A computer-readable storage medium, wherein the storage medium stores a computer program or instructions; and when the computer program or the instructions are executed by a communication apparatus, the method according to any one of claims 1 to 28 is implemented.
